(19) Europäisches Patentamt / European Patent Office / Office européen des brevets

(11) **EP 2 591 599 B1**

(12) **EUROPEAN PATENT SPECIFICATION**

(45) Date of publication and mention of the grant of the patent:
**01.02.2017 Bulletin 2017/05**

(21) Application number: **11727988.5**

(22) Date of filing: **28.06.2011**

(51) Int Cl.:
**H04N 19/436** *(2014.01)*   **H04N 19/44** *(2014.01)*
**H04N 19/63** *(2014.01)*   **H04N 19/645** *(2014.01)*

(86) International application number:
**PCT/EP2011/060844**

(87) International publication number:
**WO 2012/004164 (12.01.2012 Gazette 2012/02)**

(54) **VIDEO DECODER, METHOD AND COMPUTER PROGRAM FOR PARALLEL DECODING OF A SEQUENCE OF PICTURES**

VIDEODECODER, VERFAHREN UND COMPUTERPROGRAMM ZUR PARALLELEN DECODIERUNG EINER BILDFOLGE

DÉCODEUR VIDÉO, PROCÉDÉ ET PROGRAMME INFORMATIQUE POUR LE DÉCODAGE PARALLÈLE D'UNE SÉQUENCE D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2010 US 361708 P**
**06.07.2010 DE 102010030973**

(43) Date of publication of application:
**15.05.2013 Bulletin 2013/20**

(73) Proprietor: **Fraunhofer-Gesellschaft zur Förderung der angewandten Forschung e.V.**
**80686 München (DE)**

(72) Inventors:
• **BRUNS, Volker**
  **91056 Erlangen (DE)**
• **SPARENBERG, Heiko**
  **90489 Nürnberg (DE)**
• **FOESSEL, Siegfried**
  **91054 Erlangen (DE)**

(74) Representative: **Schenk, Markus et al**
**Schoppe, Zimmermann, Stöckeler Zinkler, Schenk & Partner mbB Patentanwälte**
**Radlkoferstrasse 2**
**81373 München (DE)**

(56) References cited:
**WO-A1-2008/079041**

• **COR MEENDERINCK ET AL: "Parallel Scalability of Video Decoders", TECHNICAL REPORT,, 30 June 2008 (2008-06-30), XP008139406, DOI: 10.1007/S11265-008-0256-**
• **DATLA S ET AL: "Parallelizing Motion JPEG 2000 with CUDA", COMPUTER AND ELECTRICAL ENGINEERING, 2009. ICCEE '09. SECOND INTERNATIONAL CONFERENCE ON, IEEE, PISCATAWAY, NJ, USA, 28 December 2009 (2009-12-28), pages 630-634, XP031742493, ISBN: 978-1-4244-5365-8**
• **CHANG Y-C ET AL: "Advances in Hardware Architectures for Image and Video Coding-A Survey", PROCEEDINGS OF THE IEEE, IEEE. NEW YORK, US, vol. 93, no. 1, 1 January 2005 (2005-01-01), pages 184-197, XP011123863, ISSN: 0018-9219, DOI: 10.1109/JPROC.2004.839600**

**Description**

Embodiments of the present invention describe a video decoder and a method of decoding a sequence of pictures, for example a video. Embodiments of the present invention may be used, e.g., for decoding picture sequences in accordance with the JPEG2000 standard.

JPEG2000 is a modem picture compression method that is employed in various fields of application, such as in digital cinema, in digital film archives or in medical technology. Particularly with high bit rates, it provides a better picture quality than comparable compression methods. However, computations for creating and interpreting a JPEG2000 picture are hugely intense, so that it is only under specific conditions that current PCs will manage to achieve this in real time. Real-time capability, however, is a basic prerequisite for many applications.

In a JPEG2000 data stream, pictures are typically coded into a plurality of transformation coefficient blocks. Said transformation coefficient blocks typically originated from a discrete wavelet transformation with subsequent scalar quantization of the wavelet coefficients within a JPEG2000 encoder. A transformation coefficient block (which, more generally, may also be referred to as a code block) may be associated with precisely one frequency band, respectively, that was formed in the discrete wavelet transformation. Typically, said transformation coefficient blocks are entropy-decoded within a JPEG2000 decoder while using the EBCOT (embedded block coding with optimized truncation) algorithm. The EBCOT algorithm is a context-adaptive, binary, arithmetic entropy coding algorithm. The entropy-decoded data is then typically de-quantized, and an inverse wavelet transformation (for example an inverse discrete wavelet transformation) is performed. For color pictures, an inverse color transformation may be additionally performed so as to obtain the pictures that are coded in the JPEG2000 data stream in a decoded manner and to make them available for being output on a display, for example.

The computationally most intensive step in this context is the above-described EBCOT entropy decoding. It is therefore desirable to accelerate and/or simplify EBCOT decoding so as to enable real-time reproduction of JPEG2000-compressed picture sequences. One possibility of reproducing JPEG2000-compressed picture sequences in real time is to employ integrated circuits.

However, this is cost-intensive hardware that is employed only within the framework of business applications.

Decoders whose real-time capability is non-existent or limited are existing software decoders. In this context, there are a multitude of commercial and free JPEG2000 implementations which do not achieve real time in their basic versions.

In addition, the problem may also be circumvented by dispensing with the JPEG2000 format for those work steps where real-time capability is necessary. To this end, all pictures are initially converted to a different format that is faster to decode. It is only after this that the critical work steps are performed. Finally, the picture sequences are reconverted to JPEG2000. Compression and decompression here result in an unnecessary waste of resources.

In addition, the JPEG2000 format offers the possibility of scaling. In this manner, it is possible not to decode specific parts of the data stream and thereby to increase velocity. The user can decide which parts of the data he/she does not want to fully decode. As a result, the decoder provides a picture reduced in quality or picture size, for example. However, this scaling is not desirable, in particular, in cinema technology.

WO2008079041A1 describes a concept for encoding/decoding video information involving selecting a video frame and a macroblock of the video frame to process and initiating a processing operation of the selected macroblock by a first thread, wherein the processing operation involves one of decoding the macroblock or encoding the macroblock. When prediction information is required from a second frame being decoded or encoded by a second thread, the processing operation of the selected macroblock by the first thread is stalled until the prediction information is available.

COR MEENDERINCK ET AL: "Parallel Scalability of Video Decoders", TECHNICAL REPORT,, 30 June 2008, discusses the question whether emerging and future applications exhibit sufficient parallelism, in particular thread-level parallelism, to exploit the large numbers of cores future chip multiprocessors (CMPs) are expected to contain. As a case study the parallelism available in video decoders is investigated. Specifically, the parallel scalability of the H.264 decoding process is analysed. The data structures and dependencies of H.264 are discussed and it is shown what types of parallelism it allows to be exploited. It is also shown that previously proposed parallelization strategies such as slice-level, frame-level, and intra-frame macroblock (MB) level parallelism, are not sufficiently scalable. Based on the observation that inter-frame dependencies have a limited spatial range the article proposes a new parallelization strategy, called Dynamic 3D-Wave. It allows certain MBs of consecutive frames to be decoded in parallel. Using this new strategy the limits to the available MB-level parallelism in H.264 is analysed. Using real movie sequences a maximum MB parallelism ranging from 4000 to 7000 is found. A case study to assess the practical value and possibilities of a highly parallelized H.264 application is also presented. The results show that H.264 exhibits sufficient parallelism to efficiently exploit the capabilities of future manycore CMPs.

DATLA S ET AL: "Parallelizing Motion JPEG 2000 with CUDA", COMPUTER AND ELECTRICAL ENGINEERING, 2009. ICCEE '09. SECOND INTERNATIONAL CONFERENCE ON, IEEE, PISCATAWAY, NJ, USA, 28 December 2009, is an article dealing with the rapid growth of graphics processing unit (GPU) processing capability and the fact that the use of GPU as a coprocessor for assisting the CPU in computing massive data has become indispensable. Nvidia's CUDA general-purpose graphical processing unit (GPGPU) architecture is presented as greatly benefiting from single instruction multiple thread (SIMT) styled, computationally expensive programs. Video encoding us used as an example of such an application which can see impressive performance gains from CUDA optimization. The paper details the experience of porting the motion JPEG 2000 reference encoder to the CUDA architecture. Each major structural/computational unit of JPEG 2000 is discussed in the CUDA framework and the results are provided wherever required. The experimental results demonstrate that the CUDA based implementation works 20.7 times faster than the original implementation on the CPU.

CHANG Y-C ET AL: "Advances in Hardware Architectures for Image and Video Coding-A Survey", PROCEEDINGS OF THE IEEE, IEEE. NEW YORK, US, vol. 93, no. 1, 1 January 2005 (2005-01-01), pages 184 - 197, is a paper which provides a survey of state-of-the-art hardware architectures for image and video coding. Fundamental design issues are discussed with particular emphasis on efficient dedicated implementation. Hardware architectures for MPEG-4 video coding and JPEG 2000 still image coding are reviewed as design examples, and special approaches exploited to improve efficiency are identified. Further perspectives are also presented to address the challenges of hardware architecture design for advanced image and video coding in the future. It is an object of the present invention to provide a concept that enables improved decoding of picture sequences.

This object is achieved by a video decoder as claimed in claim 1, a method as claimed in claim 13, and a computer program as claimed in claim 14.

Embodiments of the present invention provide a video decoder for decoding a sequence of pictures, each of which is coded into a plurality of transformation coefficient blocks, the video decoder being configured to decode transformation coefficient blocks of different pictures on different computing kernels of a first SIMD group at the same time.

It is a core idea of the present invention that improved decoding of transformation coefficient blocks of a sequence of pictures (such as a video sequence, for example) may be provided when video decoding of different transformation coefficient blocks of different pictures is performed on different computing kernels of a first SIMD group at the same time. By decoding the transformation coefficients in parallel, a tremendous advantage in terms of velocity may be achieved, in particular as compared to systems wherein decoding is always performed in a strictly sequential manner. It has been recognized that in the decoding of transformation coefficient blocks of different pictures (in particular with JPEG2000-coded pictures), the steps to be performed in the decoding process are similar or identical. This enables parallel decoding of the transformation coefficients on computing kernels of an SIMD group.

Brief description of the figures

Embodiments of the present invention will be explained below in more detail with reference to the accompanying figures, wherein:

Fig. 1a     shows a block diagram of a video decoder in accordance with an embodiment of the present invention;

Fig. 1b     shows a schematic representation of an association of transformation coefficient blocks with computing kernels, as may be performed by the video decoder of Fig. 1a;

Fig. 2a     shows a further association of transformation coefficient blocks with computing kernels, as may be performed by the video decoder of Fig. 1a;

Fig. 2b     shows a further association of transformation coefficient blocks with computing kernels, as may be performed by the video decoder of Fig. 1a;

Fig. 3     shows a flowchart for decoding JPEG2000 data streams, as may be used with the video decoder of Fig. 1a;

Fig. 4     shows a schematic representation of kernel functions from the flowchart of Fig. 3, which may be performed on a stream processor;

Fig. 5     shows a structure chart for determining code blocks to be discarded;

Fig. 6     shows a further association of transformation coefficient blocks with computing kernels, as may be performed by the video decoder of Fig. 1a;

Fig. 7     shows a schematic representation of an exemplary transformation coefficient block and its decomposition into individual bit planes;

Fig. 8       shows a sequence diagram for decoding the transformation coefficient block of Fig. 7; and

Fig. 9       shows a flowchart of a coding cycle in the decoding of a transformation coefficient block.

Detailed description of embodiments

Before describing embodiments of the present invention below with reference to the accompanying figures, it shall be noted that, in the figures, elements that are identical or have identical functions are given the same reference numerals and that repeated descriptions of said elements are dispensed with. Descriptions of elements provided with identical reference numerals are therefore mutually exchangeable and mutually applicable.

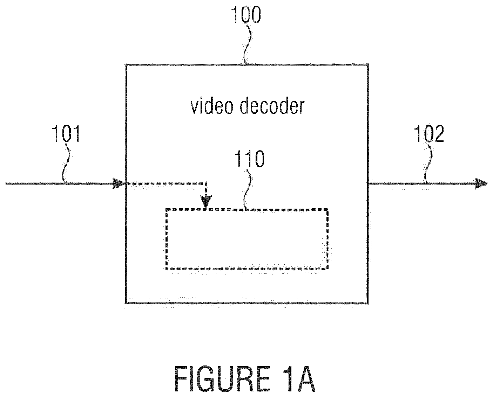

Fig. 1a shows a video decoder 100 for decoding a sequence of pictures, each of which is coded into a plurality of transformation coefficient blocks, the video decoder 100 being configured to decode transformation coefficient blocks of different pictures on different computing kernels of a first SIMD group at the same time. The video decoder 100 may receive, for example, a data stream 101 (e.g. a JPEG2000 data stream) at an input so as to decode transformation coefficient blocks of the pictures coded into the data stream 101, in order to provide same at an output as a sequence of decoded transformation coefficient blocks 102.

An SIMD (single instruction multiple data) group is characterized in that it comprises several computing kernels, all of the computing kernels of the SIMD group performing the same instruction on different data at the same time. Such SIMD groups may be found, for example, on so-called stream processors as are used in graphics cards, for example. Such a stream processor typically comprises a plurality of SIMD groups, each of which comprises a plurality of computing kernels and an instruction register. Each of the SIMD groups may process an instruction of its own on its computing kernels, independently of instructions of further SIMD groups of the same stream processor.

In accordance with some embodiments, the video decoder 100 may be configured to decode the transformation coefficient blocks while using an EBCOT Tier-1 entropy-decoding algorithm, which will be described below with reference to an exemplary JPEG2000 decoder.

In accordance with further embodiments, the video decoder may comprise a wavelet synthesis unit 110 configured to subject the transformation coefficient blocks to one wavelet synthesis per picture. The transformation coefficient blocks may have originated, for example, from a wavelet analysis within a video encoder, and each transformation coefficient block may be associated with precisely one frequency band that originated in the wavelet analysis.

A transformation coefficient block may also be referred to, more generally, as a code block below.

An SIMD group may also be referred to as an SIMD vector below.

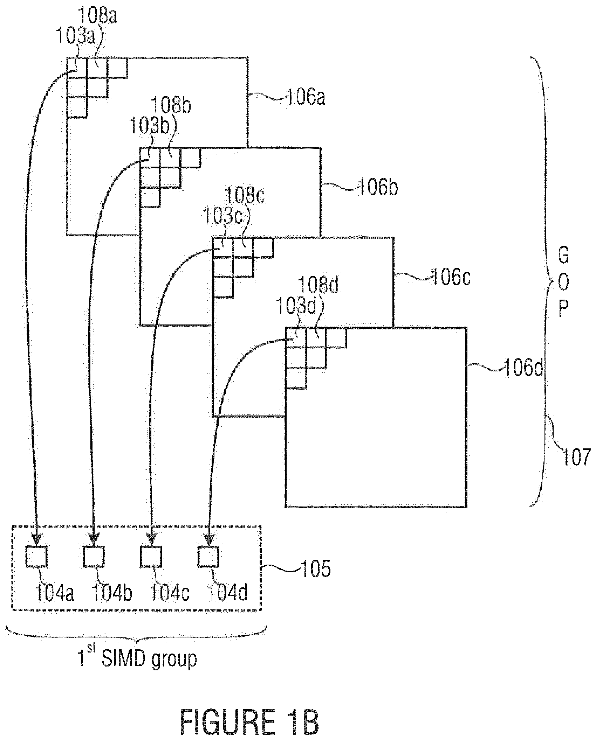

Fig. 1b shows an association of first transformation coefficient blocks 103a - 103d with computing kernels 104a - 104d of a first SIMD group 105, as may be effected, for example, in the video decoder 100 of Fig. 1a. It becomes apparent from Fig. 1b that first transformation coefficient blocks 103a - 103d of different pictures 106a - 106d are decoded on different computing kernels 104a - 104d of the same first SIMD group 105. For example, a first transformation coefficient block 103a of a first picture 106a is decoded on a first computing kernel 104a of the first SIMD group 105, and a first transformation coefficient block 103b of a second picture 106b is decoded on a second computing kernel 104b of the first SIMD group 105, etc. Since the computing kernels 104a - 104d of the first SIMD group 105 work in parallel, i.e. they execute the same instructions on different data (as was already described above), a decoding time may be achieved that is reduced, as compared to purely sequential processing of the transformation coefficient blocks 103a - 103d, by a factor equal to the number of the computing kernels of the first SIMD group 105 (and of the transformation coefficient blocks that may be decoded in parallel therewith).

The pictures 106a - 106d, which may be combined into a first group of pictures 107, may follow one another, for example, within the sequence of pictures decoded by the video decoder 100. A group of pictures is also referred to as GOP in technical jargon. SIMD groups (also referred to as SIMD vectors) within stream processors are typically structured such that as soon as a function to be processed within one computing kernel of an SIMD group deviates at the same point in time from a function to be processed within another computing kernel of the SIMD group (for example because of different input data in an if-then request), processing of both said functions is performed purely sequentially in the respective computing kernels of the SIMD group. Therefore, with parallel computation within the computing kernels 104a - 104d of the first SIMD group 105, utilization of successive pictures 106a - 106d in a group of pictures 107 whose first transformation coefficient blocks 103a - 103d are processed by the same first SIMD group 105 may offer advantages due similarities between the successive pictures 106a - 106d, in particular as compared to a purely random choice of pictures.

Successive pictures 106a - 106d exhibit similarities in particular at identical or similar positions within the successive pictures 106a - 106d. Positions of the first transformation coefficient blocks 103a - 103d of the (successive) pictures 106a - 106d, which are decoded on the computing kernels 104a - 104d of the common first SIMD group 105, may spatially overlap in accordance with some embodiments of the present invention. In addition, the first transformation coefficient blocks 103a - 103d may be identical in terms of their positions within the respective pictures 106a - 106d. In this manner, a maximally possible level of similarity of the first transformation coefficient blocks 103a - 103d may be achieved. Within the computing kernels 104a - 104d, wherein the first transformation coefficient blocks 103a - 103d are decoded, a maximum level of parallelism may thus be achieved within the first SIMD group 105, and therefore, a computing time for decoding the first transformation coefficient blocks 103a - 103d may be minimized.

In particular as compared to a distribution of transformation coefficient blocks of one and the same picture to computing kernels of one and the same SIMD group, this is an advantage, since transformation coefficient blocks of different positions within a picture typically differ to a larger extent than do transformation coefficient blocks of identical positions in successive pictures. For example, transformation coefficient blocks within a picture may have no similarity whatsoever, e.g. when there is an object boundary between two transformation coefficient blocks of a picture.

Decoding of further transformation coefficient blocks of the pictures 106a - 106d, for example of second transformation coefficient blocks 108a - 108d, may then be effected, for example, after the decoding of the first transformation coefficient blocks 103a - 103d, on the computing kernels 104a - 104d as the first SIMD group 105, or, in accordance with a further embodiment, at the same time of the decoding of the first transformation coefficient blocks 103a - 103d, on computing kernels of a further SIMD group.

In accordance with some embodiments of the present invention, each transformation coefficient block 103a - 103d, 108a - 108d of a picture 106a - 106d is associated with precisely one frequency band of the wavelet synthesis, and the video decoder 100 may be configured such that transformation coefficient blocks of different pictures, which are decoded on the different kernels of an SIMD group at the same time, are associated with the same frequency band. This may have the advantage, for example that, in JPEG2000, the transformation coefficient blocks of a frequency band are quantized in exactly the same manner and are thus represented with the same number of bit planes.

Even though in the embodiment depicted in Fig. 1b, the first SIMD group 105 comprises only four computing kernels 104a - 104d, an SIMD group may also comprise, in accordance with further embodiments, any number of computing kernels. SIMD groups of stream processors typically comprise eight or sixteen computing kernels. A number of computing kernels per SIMD group may thus also determine the number of pictures in a group of pictures whose transformation blocks are decoded on computing kernels of an SIMD group at the same time. For example, if an SIMD group comprises eight computing kernels, eight transformation coefficient blocks of eight different pictures may be decoded on the eight computing kernels of this SIMD group at the same time. As was already described above, a stream processor may comprise a plurality of SIMD groups operating in parallel with one another. Thus, it is possible, for example, to compute all of the transformation coefficient blocks of several pictures in parallel, transformation coefficient blocks of different pictures, but of overlapping positions, being decoded, for example, on computing kernels of the same SIMD group, respectively.

As a simple example, it shall be assumed that a stream processor comprises sixteen SIMD groups, each of said SIMD groups comprising four computing kernels. In this case, e.g. sixteen transformation coefficient blocks of four pictures may be decoded at the same time. If it is assumed that each picture comprises only sixteen transformation coefficient blocks, all of these can be decoded at the same time.

A prerequisite for decoding these transformation coefficient blocks of one picture at the same time is obviously that the transformation coefficient blocks are coded independently of one another, i.e. in a non-predictive manner. If it is assumed that instead of sixteen SIMD groups, the stream processor comprises thirty-two SIMD groups having four computing kernels each, transformation coefficient blocks of a first group of pictures (consisting of four pictures) may be decoded on the first sixteen SIMD groups of the stream processor at the same time as transformation coefficient blocks of a second group of pictures (which is different from the first group and consists of four pictures) may be decoded on the second sixteen SIMD groups of the stream processor. Embodiments of the present invention thus enable scalability dependent on the size of the stream processor, optimal capacity utilization of the stream processor, and, thus, effective decoding of the transformation coefficient blocks.

In accordance with further embodiments, a number of pictures whose transformation coefficient blocks are decoded at the same time, i.e. a size of an above-mentioned group of pictures, may also be smaller than a number of computing kernels of an SIMD group. In this case, adjacent transformation coefficient blocks of a picture may also be processed on computing kernels of one and the same SIMD group at the same time. With a GOP size of 4, and a number of computing kernels of an SIMD group of 8, two transformation coefficient blocks of each picture may be decoded, for example, on computing kernels of one and the same SIMD group at the same time. Even though, in this case, more divergences may occur within the SIMD group than in the case of decoding each transformation coefficient block of a picture on a different SIMD group, this disadvantage may be balanced off by the fact that better capacity utilization of the SIMD groups may be achieved. In addition, this approach is still advantageous as compared to not utilizing the similarities of the (successive) pictures at all.

In this case it is useful to select, within a picture, adjacent transformation coefficient blocks for decoding on one and the same SIMD group, since they typically differ to a lesser degree within a picture than do non-adjacent ones.

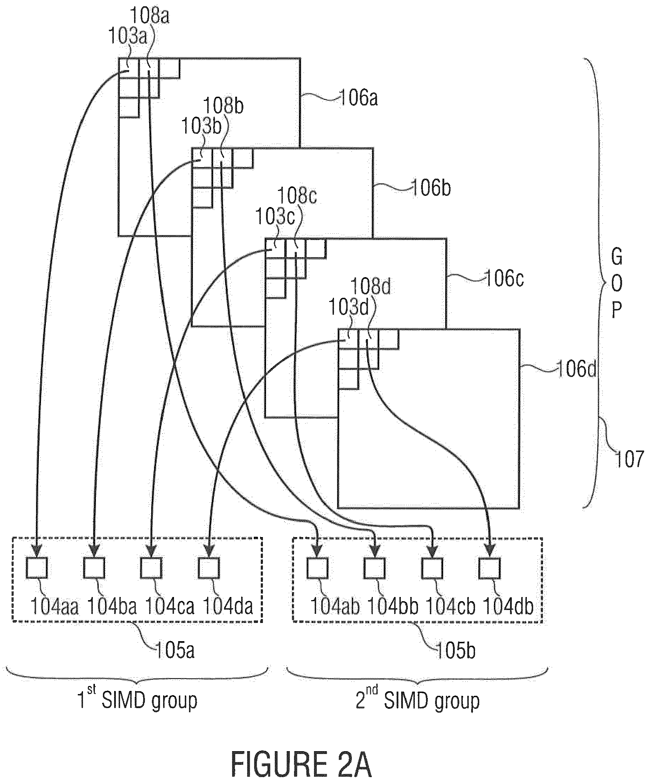

Fig. 2a shows a further association of transformation coefficient blocks of different pictures to different computing kernels of different SIMD groups. The association shown in Fig. 2a might be performed by the video decoder 100 of Fig.

1a, for example. The association shown in Fig 2a is based on the above-described principle that different transformation coefficient blocks of same pictures are associated with different SIMD groups (for example of a stream processor) for decoding so as to decode said different transformation coefficient blocks of one picture at the same time as the different transformation coefficient blocks of further pictures. A first SIMD group 105a shown in Fig. 2a which comprises computing kernels 104aa, 104ba, 104ca, 104da is identical, for example, with the first SIMD group 105 of Fig. 1b. A second SIMD group 105b shown in Fig. 2a and comprising computing kernels 104ab, 104bb, 104cb, 104db may also be identical with the first SIMD group 105 of Fig. 1b. Even though the hardware realization (the structural design) of the two SIMD groups 105a and 105b may be identical, completely different programs or commands may be executed in parallel on the computing kernels of said two SIMD groups.

In the example shown in Fig. 2a, a first transformation coefficient block 103a of a first picture 106a from a group of pictures 107 is associated with a first computing kernel 104aa from the first SIMD group 105a. A first transformation coefficient block 103b of a second picture 106b of the group of pictures 107 is associated with a second computing kernel 104ba of the first SIMD group 105a for decoding, etc. Fig. 2a differs from Fig. 1b in that, in addition to the association of first transformation coefficient blocks 103a - 103d of the pictures 106a - 106d from the group of pictures 107 with the computing kernels 104aa - 104da of the first SIMD group 105a, second transformation coefficient blocks 108a - 108d of the pictures 106a - 106d from the group of pictures 107 are associated with the computing kernels 104ab - 104db of the second SIMD group 105b. For example, a second transformation coefficient block 108a of the first picture 106a from the group of pictures 107 is associated with a first computing kernel 104ab of the second SIMD group 105b for decoding. In addition, a second transformation coefficient block 108b of the second picture 106b from the group of pictures 107 is associated with a second computing kernel 104bb of the second SIMD group 105b for decoding, etc.

In the embodiment shown in Fig. 2a, not only one transformation coefficient block per picture is decoded at the same time in each case, but two transformation coefficient blocks per picture are decoded at the same time. To a person skilled in the art, it is obvious that this principle may be extended as desired, for example to such an extent that all of the transformation coefficient blocks of a picture are decoded on different SIMD groups of a stream processors at the same time. As may be seen from Fig. 2a, both the positions of the first transformation coefficient blocks 103a - 103d and the position of the second transformation coefficient blocks 108a - 108d overlap. This respective overlap of the transformation coefficient blocks and the decoding of transformation coefficient blocks, overlapping in terms of their positions, of different pictures on a common SIMD group exploits the similarity of the overlapping transformation coefficient blocks in successive pictures. In this manner, parallel decoding of the overlapping transformation coefficient blocks on the computing kernels of an SIMD group may be optimized. As was described above, this is based on the fact that computing kernels of an SIMD group operate in a purely parallel manner only if command steps of the different computing kernels are identical, otherwise the command steps of the different computing kernels are processed sequentially. When utilizing transformation coefficient blocks having similar contents, said command steps are identical to a larger extent than when utilizing non-contiguous (or non-similar) transformation coefficient blocks.

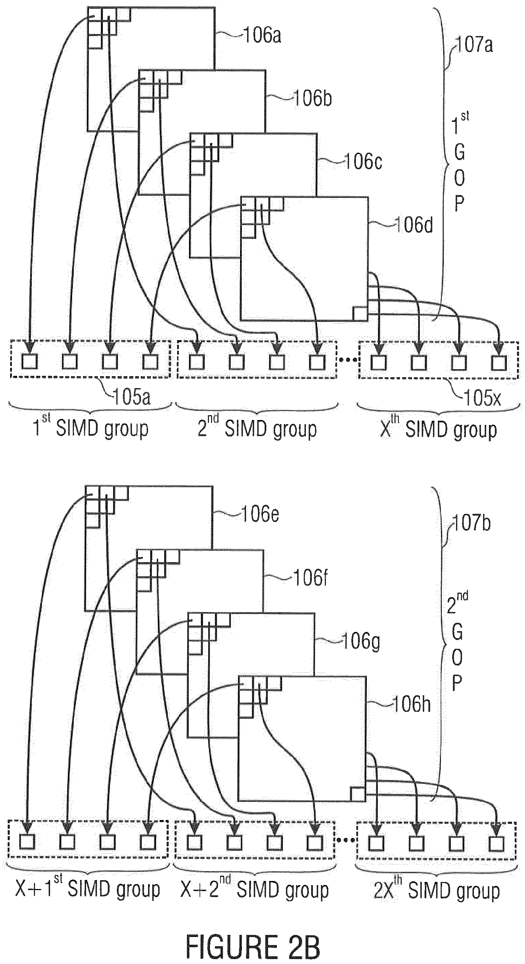

Fig. 2b shows an association of transformation coefficient blocks of different pictures of different groups of pictures with different computing kernels of different SIMD groups. It was already mentioned above that it is also possible for a number of pictures (or their transformation coefficient blocks) which exceeds the number of computing kernels of an SIMD group to be decoded at the same time. This is shown in Fig. 2b. Four pictures (for example pictures that come one after the other within a sequence of pictures) 106a - 106d are associated with a first group of pictures 107a, and further pictures 106e - 106h (which follow the pictures 106a - 106d within the sequence of pictures, for example) are associated with a second group of pictures 107b. In a sequence of pictures, for example a first picture 106e of the second group of pictures 107b may follow a last (fourth) picture 106d of the first group 107a. A subdivision of the individual pictures from the sequence of pictures into groups of pictures may be performed on the basis of a number of computing kernels of an SIMD group. In accordance with a further embodiment of the present invention, however, the pictures 106a - 106h may also be combined into a common group of pictures, for example since their transformation coefficient blocks may be decoded on computing kernels of different SIMD groups of a stream processor at the same time. Therefore, pictures may also be subdivided into groups of pictures independently of the number of computing kernels of an SIMD group.

In the example shown in Fig. 2b, each of the pictures 106a - 106h of the two groups of pictures 107a, 107b comprises X transformation coefficient blocks. Transformation coefficient blocks of the first group of pictures 107a are therefore decoded on computing kernels X of different SIMD groups, precisely one transformation coefficient block of one of the pictures 106a - 106d of the first group 107a being decoded, per SIMD group, on a computing kernel of the SIMD group. By analogy therewith, transformation coefficient blocks of the pictures 106e - 106h of the second group 107b of pictures are decoded on X further SIMD groups of the stream processor. In this context, each transformation coefficient block of a picture of the pictures 106e - 106h of the second group 107b is associated with precisely one computing kernel of precisely one SIMD group of the second X SIMD groups.

It is to be noted that an association of the transformation coefficient blocks of the pictures 106a - 106d of the first group of pictures 107a as well as of the pictures 106e - 106h of the second group of pictures 107b with the computing kernels of the 2X SIMD groups is performed such that on none of the SIMD groups, two or more transformation coefficient blocks of one and the same picture of the pictures 106a - 106h are decoded at the same time. It shall be briefly mentioned once again that computing kernels of an SIMD group always execute the same instruction in parallel, and that, in case of a deviation of the instructions within the computing kernels of an SIMD group (for example when an if-then query provides a different result), sequential processing on the computing kernels is performed for such time until the instructions on the individual computing kernels of the SIMD group are identical again and parallel processing may thus be continued.

Therefore, a similarity of the transformation coefficient blocks decoded on computing kernels of one and the same SIMD group is advantageous since said cases in which the instructions deviate from one another (as was mentioned above in terms of the an if-then query) occur more rarely than in cases wherein the transformation coefficient blocks are not similar to one another, or are significantly different from one another. In contrast to the strictly parallel processing of the computing kernels of one SIMD group, individual SIMD groups of a stream processor may execute different instructions at the same time. In other words, each SIMD group may execute, on its computing kernels, an operation that is independent of any operation performed on computing kernels of a further SIMD group. A similarity of transformation coefficient blocks processed on different SIMD groups is therefore not required and would not result in any velocity-related advantage since each SIMD group may perform processing independently of the other SIMD groups.

The example shown in Fig. 2b of decoding transformation coefficient blocks of several groups of pictures at the same time may be extended as desired, for example for such time until a stream processor is working at full capacity. The aspects explained above as well as further aspects shall now be described below in detail for the JPEG2000 standard by means of an example of a video decoder.

In the example described below, the essential parallelizable coding steps are outsourced to a stream processor and are thus executed by many parallel vector processors (referred to as SIMD groups in the following). In addition, an offloaded CPU (which controls the stream processor, for example) may be used in parallel for executing remaining coding steps already for pictures to follow. One example of a stream processor that is already available in may modem desktop computers and notebooks is the processing unit of a graphics card (also referred to as GPU - graphics processing unit). High-end GPUs nowadays consist of hundreds of processor kernels (of the SIMD groups) operating in parallel, while new chips are constantly being developed and the number of said kernels constantly increases. In addition, there exist first graphics cards which combine two GPUs on one card. The computing power of GPUs, measured in floating point operations per second (FLOPS), increases exponentially and has long exceeded that of CPUs. By means of GPGPU technologies, this computing power may be efficiently used for data-parallel tasks. GPGPU stands for general purpose computing on GPUs.

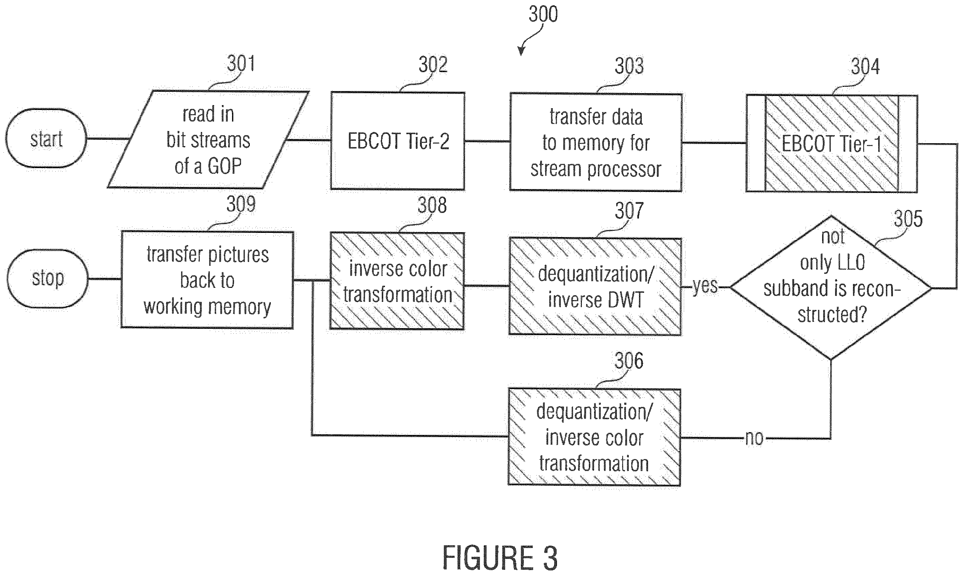

Fig. 3 shows a program flowchart 300 for decoding a JPEG2000 sequence of pictures as may be executed on a video decoder in accordance with an embodiment of the present invention (e.g. on the video decoder 100 of Fig. 1a). In the program flowchart 300 shown in Fig. 3, so-called kernel functions, which are executed on a stream processor, are shown in a hatched manner. In the following, in particular the kernel function EBCOT Tier-1 will be of interest, since transformation coefficient blocks of different pictures are decoded therein, which may be performed, as was already described above, by a video decoder in accordance with an embodiment of the present invention.

The rough procedure of the program flowchart 300, shown in Fig. 3, for decoding coded JPEG2000 pictures is that, in a first step 301, compressed JPEG2000 bit streams or data streams (e.g. bit streams of a group of pictures 107) are initially read into a working memory, for example from a hard disc. In a non-parallel step 302, meta data (e.g. meta data for the transformation coefficient blocks) are extracted from the bit streams, for example by means of the CPU (rather than by means of the stream processor). This step 302 may also be referred to as EBCOT Tier-2. Next, the bit streams may be copied into the memory of the graphics card in a step 303. Or, more generally, the data for decoding may be transmitted to the memory of a stream processor. Since the transmission velocity may increase, on some hardware platforms, as the amount of data increases, all of the bit streams (in particular bit streams of different, e.g. successive, pictures) are previously copied to come one after the other so as to be able to be transmitted in a single operation. In a step 304, the individual bit or data streams of the different pictures and, thus, their transformation coefficient blocks may be decoded on the stream processor while using the EBCOT Tier-1 entropy decoding algorithm (with a video decoder in accordance with an embodiment of the present invention). This process of the EBCOT Tier-1 algorithm and in particular the advantages of utilizing a video decoder in accordance with an embodiment of the present invention in the EBCOT Tier-1 decoding will be explained in more detail later on.

After checking, in a step 305, whether only one steady-component frequency band (for example a so-called LL0 subband), which has formed in a wavelet analysis within a video encoder that has encoded the JPEG2000 data streams, is reconstructed, either a dequantization or an inverse color transformation is performed in a step 306 on the stream processor on the basis of this decision, or a dequantization and an inverse discrete wavelet transformation is performed in a step 307. In the event of the dequantization and the inverse discrete wavelet transformation, an inverse color transformation is subsequently also performed in a step 308. By combining different decoding steps in common functions, expensive memory accesses may be minimized in that results are temporarily stored locally. In other words, in several decoding steps, the pictures are reconstructed on the graphics card (on the stream processor of the graphics card). Subsequently, the raw data may either be transmitted back to the working memory in a step 309, or be displayed directly via the graphics card output.

For performing said functions, there is a so-called GPGPU technology. This technology enables software developers to execute instructions on the graphics card (on the GPU of the graphics card) without having to use any graphics APIs that have different purposes, such as OpenGL or Direct3D. Exemplary proprietary solutions are the so-called "Compute Unified Device Architecture" (CUDA) and the so-called "ATI Stream Technology". In addition, however, there is also a non-proprietary standard, namely OpenCL. As was already mentioned above, GPUs (processors of graphics cards) typically have a stream processor architecture. Said GPUs have many individual process units (also referred to above as computing kernels 104a - 104d) that are combined into SIMD groups (for example the above-mentioned SIMD group 105). Such an SIMD group may also be referred to as a vector processor or SIMD vector. As was already explained above, SIMD stands for single-instruction multiple-data paradigms. The processors (the computing kernels) of such an SIMD group always execute the same instruction on different input data in parallel. With regard to the embodiments in Figs. 1b, 2a, 2b, these different input data constitute the different transformation coefficient blocks that are decoded on the computing kernels of the individual SIMD groups.

Some hardware platforms are characterized in that there are several storage regions that differ in terms of properties such as size and reading and writing speeds. Optimum performance of a stream processor will be achieved only if several rules are observed. In order to be able to fully exploit the computing resources, an algorithm should exhibit a sufficient level of data parallelism. In other words, an algorithm should execute the same instructions for as large a number of data as possible. For exploiting the resources of a stream processor, typically a size of thousands of threads (processes) is necessary. A thread is typically executed on a computing kernel of an SIMD group. If this is applied to the preceding embodiments, a thread may be the decoding of a transformation coefficient block, for example. In addition, threads (processes) of an SIMD group should execute the same instruction at any point in time as far as possible (as was already mentioned previously). If one or more threads execute other instructions, the rest of the group must wait until these threads have finished processing, so as to then continue parallel processing. Memory banks of a stream processor are partly optimized to the effect that adjacent threads (processes running on adjacent computing kernels) access, within an SIMD group, adjacent memory addresses in parallel. Due to the low access rate, writing and reading from the global memory (of the stream processor) should be minimized. In addition to the parallel access (all of the threads may access their memory addresses at the same time), this may also be achieved by performing intermediate storing (so called cashing) in relatively small, relatively fast storage regions.

In the example of the JPEG2000 decoder described here, the individual decoding steps (shown to be hatched in Fig. 3) are implemented, on the graphics card, in so-called kernel functions. Such a kernel function is called from the CPU (main processor of a system), but is executed on the stream processor (on the processor of the graphics card). For the purpose of the above-mentioned single-instruction multiple-data (SIMD) paradigms, a kernel function is executed in parallel in many threads (processes), each thread running on one of the processor kernels (a computing kernel of an SIMD group) and being able to calculate, on the basis of its individual ID (identification number), for which input data (for which transformation coefficient block) it is responsible.

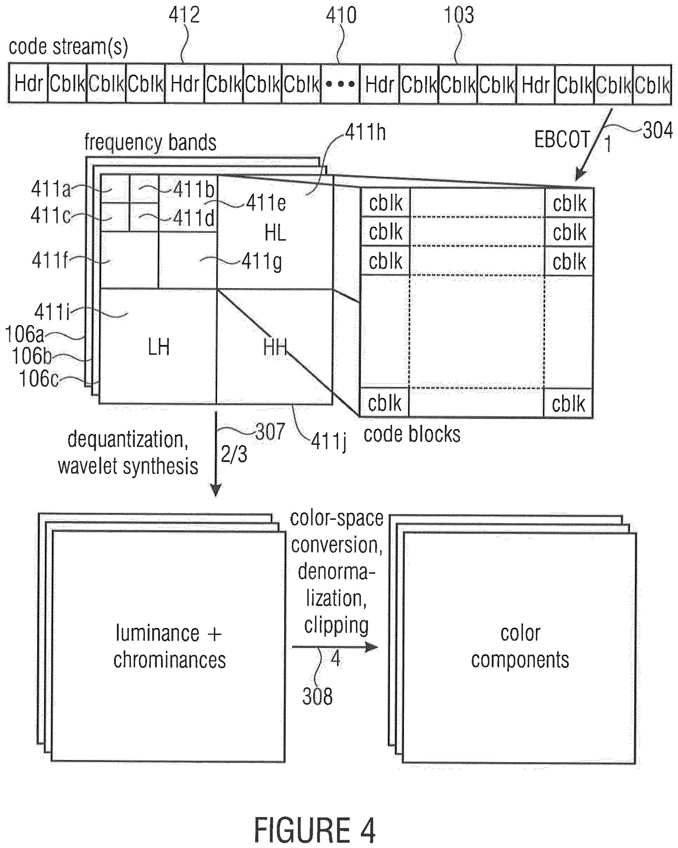

In the present JPEG2000 decoder, there are essentially four different kernel functions that are executed on the stream processor. Fig. 4 shows these four different kernel functions. A first kernel function is entropy decoding while using the EBCOT Tier-1 algorithm for context modeling and MQ decoding. This kernel function is depicted as block 304 in Fig. 3. A second kernel function is dequantization with a subsequent horizontal wavelet synthesis. A third kernel function is a vertical wavelet synthesis. The second and third kernel functions are represented, in a combined manner, in block 307 of Fig. 3. A fourth kernel function consists of optional dequantization, inverse color space transformation, clipping, and denormalization. This fourth kernel function is depicted in Fig. 3 by means of block 308.

It is apparent from Fig. 4 that each picture 106a - 106c is subdivided into several frequency bands 411a - 411 j that have formed within a JPEG2000 encoder in a wavelet synthesis. The frequency band 411 a is a so-called steady-component frequency band. The steady-component frequency band 411 a is typically a most significant frequency band, i.e. it contains the information that is most important to the picture, and a frequency band 411j, which is associated with high frequencies, is typically a least significant frequency band, i.e. it contains the information least important to the picture. In a JPEG2000 data stream 410, coded transformation coefficient blocks of the steady-component frequency band 411 a may be transmitted first, and coded transformation coefficient blocks of the frequency band 411j may be transmitted last, for example. A transmission of the transformation coefficient blocks of the further frequency bands within the data stream 410 is effected in the order of their reference numerals. This means that transformation coefficient blocks for the frequency band 411a are transmitted first, followed by transformation coefficient blocks for the frequency band 411b, followed by transformation coefficient blocks for the frequency band 411c, etc., up to the frequency band 411j. An advantage of JPEG2000 decoding in this context is that the transmission may be aborted at any time while it is still possible to reconstruct a picture (at least in case the steady-component frequency band 411 a was fully transmitted) and while it is always possible to achieve the maximum quality possible. It shall be mentioned once again that each transformation coefficient block or code block is associated with precisely one frequency band. As is shown in Fig. 4, the data stream 410 comprises, in addition to the transformation coefficient blocks 103, header information 412 describing, e.g. in the form of meta data, a position of a corresponding transformation coefficient block within a picture.

The kernel functions for wavelet synthesis (2, 3) as well as the quantization, inverse color transformation, clipping, and denormalization (4) have already been published in Bruns, V., Acceleration of a JPEG2000 coder by outsourcing arithmetically intensive computations to a GPU, Master of Science Thesis, Tampere University of Technology, May 2008, and therefore have not been described, nor will be explained in any more detail, in the present document.

As is apparent from Fig. 4, the first decoding step executed on the stream processor is the EBCOT Tier-1 entropy decoding 304 with context modeling. This step accounts for a large part of the entire amount of work involved in JPEG2000 decoding, but is highly dependent on picture content. The EBCOT algorithm operates on independent code blocks (the transformation coefficient blocks) and thus offers only coarse segmentation for parallelization. The individual frequency bands 411a - 411j (subbands) that have formed (within the JPEG2000 encoder) by means of the wavelet transformation are subdivided into such code blocks 103. Since there are causal dependencies within a code block 103, a code block 103 is the smallest unit that can be decoded in parallel at this point in time.

As was already described above, each computing kernel of an SIMD group decodes a transformation coefficient block 103 or, in other words, one thread reconstructs one code block 103, respectively. The position of a code block 103 within the bit streams (the data streams of the individual pictures, for example within the data stream 410) was already determined in the EBCOT Tier-2 algorithm 302 executed by the CPU, and was made available to the stream processor via the code blocks 103 along with other meta data (for example as header information 412). The coordinates of each code block 103 within the reconstructed picture or the subbands (the frequency bands) are also known, so that the decoded data (the decoded transformation coefficient blocks) may be directly written to the correct position (within the respective picture) by the threads (the processes running on the computing kernels) and need not be subsequently re-sorted. As was already described above, the capacity utilization of a stream processor may be increased by decoding code blocks 103 of several pictures at the same time, thus creating more threads. Such a group may be referred to as a group of pictures (GOP), as was already described previously. In the embodiment that is shown here of a JPEG2000 decoder, this kernel function 304 is the only one that exploits the existence of several pictures. All of the following kernel functions achieve a sufficient level of parallelism already within a single picture, since in most cases a thread may be created for one or few pixels.

In the JPEG2000 decoder presented here, it is not absolutely necessary to always reconstruct all of the code blocks. It is possible, for example, for code blocks to be empty or to belong to a frequency band that may be discarded, since possibly it is not the original resolution that is to be reconstructed, but only a reduced resolution, for example for a preview.

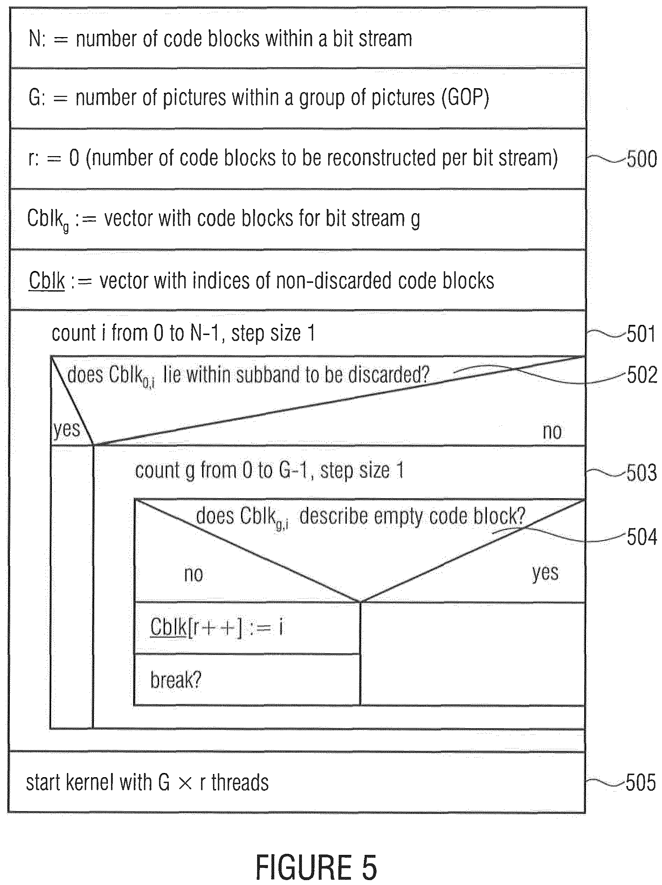

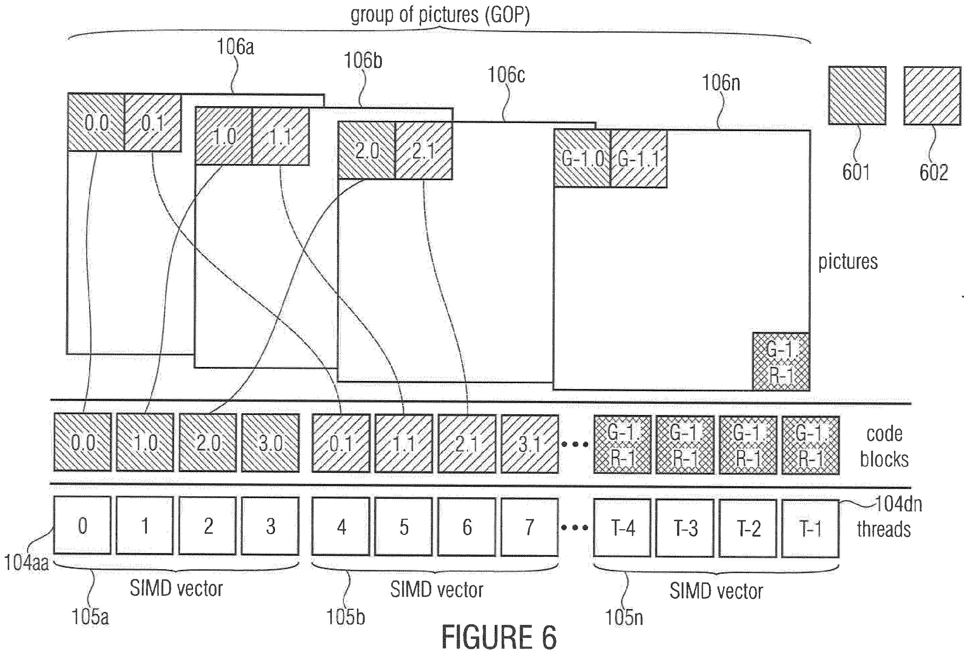

Fig. 5 shows a structure chart 500 describing which code blocks are discarded. Code blocks with the code blocks of the other pictures in the group of pictures, said latter code blocks being at the same position (and within the same frequency band), are arranged in groups. Fig. 3 reveals that only entire groups (of code blocks having the same index i) are discarded so as to enable the association, which has been described above by means of Figs. 1b - 2b, and which will be described below by means of Fig. 6, between code blocks and thread IDs or computing kernels of SIMD groups.

The structure chart 500 is to be briefly explained below. N stands for the number of code blocks within a bit stream. A bit stream typically corresponds to a picture, and N therefore also describes the number of code blocks within a picture. G describes the number of pictures within a group of pictures that are computed at the same time on different computing kernels and different SIMD groups of a stream processor. r describes the number of code blocks to be reconstructed per bit stream (or per picture). r may deviate from N, since it may be possible, as was already described previously, for code blocks to be empty or to not have to be reconstructed, since they lie within a wrong (non-required) frequency band. $Cglkg$ describes a vector with code blocks for a bit stream g (or for a picture g). $\underline{Cblk}$ describes a vector with indices of non-discarded code blocks (code blocks which have to be decoded).

A first loop 501 counts an index i from 0 to N - 1 (over the number of code blocks within a bit stream) with a step size 1. The number N of code blocks is typically identical for each bit stream or for each picture. A first query 502 determines whether a code block from the vector $Cblk_0$ for the bit stream 0 comprising the index i lies within a subband to be discarded, and if this is the case, all of the code blocks comprising this index i are discarded for all of the bit streams (for all of the pictures), and are not decoded. If this code block does not lie within a subband to be discarded, one shall determine, by means of a second count loop 503 and a second query 504, whether code blocks of all of the bit streams comprising this index i describe an empty code block and if this is the case, this group of code blocks comprising the index i may be discarded or not decoded. If at least one code block of a bit stream g is not empty, all of the code blocks of the bit streams comprising this index i are decoded. A number of the code blocks that are decoded for an index i may therefore always be identical to the number of pictures G.

Indices for reconstructing the code blocks are stored within the vector $\underline{Cblk}$. r then indicates how many code blocks per bit stream g (or per picture) are reconstructed, and is identical for all of the bit streams or pictures of the group of pictures, as was previously described.

Once the code blocks to be discarded or the code blocks to be decoded have been determined, the kernel function 304 of the EBCOT Tier-1 decoding is started with a function 505. This involves starting G x r threads. These threads are distributed, as was described in Figs. 1b - 2b, to computing kernels of SIMD groups such that transformation coefficient blocks of different pictures or different bit streams are decoded on different computing kernels of one or more SIMD groups at the same time.

Fig. 5 reveals that a number of threads for decoding the code blocks of the pictures of a group of pictures may vary for different groups of pictures. This results in that a number of computing kernels and SIMD groups required for decoding the code blocks of the pictures may also vary. In order to use a stream processor to capacity, a number of those pictures within a group of pictures which are decoded at the same time may thus also be varied. For example, in the event that fewer code blocks per picture must be decoded, a larger number of pictures may be decoded at the time than in the event that more code blocks per picture must be decoded. In other words, a video decoder in accordance with an embodiment of the present invention may be configured to vary a number of pictures to be decoded at the same time, on the basis of a number of transformation coefficient blocks, to be decoded, of the pictures, and depending on a number of computing kernels and SIMD groups of a stream processor.

Fig. 5 further reveals that even such code blocks are decoded which are empty but are within a group with code blocks (all of which have the same index i), of which at least one code block is not empty.

Since the sequence of the EBCOT Tier-1 algorithm is dependent on the content, it is advantageous, but not necessary, for the pictures of a group of pictures to have similarities, i.e. to be close to one another within a picture sequence. By cleverly associating code blocks with threads, the probability that threads within an SIMD vector will execute identical instructions may be increased.

Fig. 6 shows an association of code blocks with threads. Fig. 6 is similar to Fig. 2b, with the difference that all of the pictures 106a - 106n whose transformation coefficient blocks are decoded on computing kernels 104a - 104d of different SIMD vectors 105a - 105n at the same time are combined into a common group of pictures 107. In other words, in Fig. 6, pictures whose transformation coefficient blocks are not decoded on the same SIMD groups are also contained within a common group of pictures 107. In Fig. 6, corresponding code blocks (code blocks having the same positions within their pictures) of successive pictures are hatched uniformly. In the example of Fig. 6, for example, code blocks hatched with a first hatching 601 are decoded on threads or computing kernels of a first SIMD vector 105a. Code blocks hatched with a second hatching 602 are decoded on threads or computing kernels of a second SIMD vector 105b. As may be seen from Fig. 6, in the example given, four code blocks may be decoded on an SIMD vector in each case, since each SIMD vector has precisely four computing kernels for executing four parallel threads. In accordance with further embodiments, however, an SIMD group may also comprise any number of computing kernels, so that any number of code blocks of different pictures (for example successive pictures) may be decoded on an SIMD group at the same time. The group of pictures 107 shown in Fig. 6 consists of G pictures, each picture containing R code blocks to be reconstructed. A code block is characterized by PictureID.CblkID, respectively. A pictureID of a code block and a CblkID of a code block are calculated as follows:

$$\text{PictureID} \quad = \quad \text{modulo(ThreadID}, G)$$

$$\text{CblkID} \quad = \quad \text{PictureID x R} + (\text{ThreadID-PictureID})/G$$

Measurements have shown that EBCOT Tier-1 is calculated between 5 and 10% faster for a group of pictures from successive pictures of a sequence than for a group of pictures consisting of very different individual pictures of the sequence. For a group of identical pictures, the computation time accelerates by 20 - 25% (due to the parallel processing of several pictures at the same time).

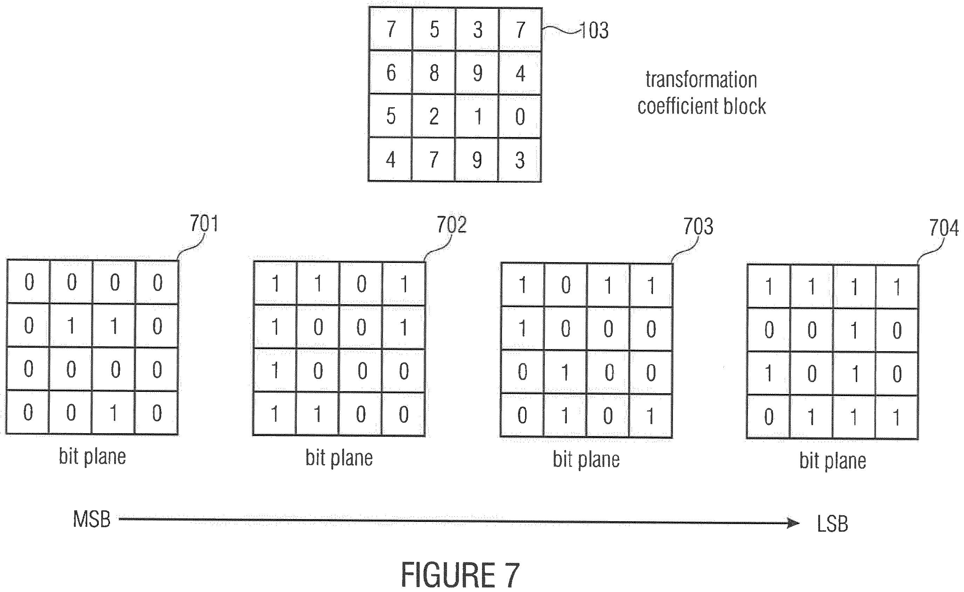

Fig. 7 shows a transformation coefficient block 103, e.g. a transformation coefficient block of a picture 106a of a group of pictures 107, prior to its decoding while using the video decoder 100 of Fig. 1a. The transformation coefficient block 103, which may also be referred to as code block 103, comprises 16 coefficients. The transformation coefficient block 103 is a JPEG2000 transformation coefficient block, for example. Fig. 7 shows the decomposition of the transformation coefficient block 103 into four bit planes 701, 702, 703, 704. A fourth bit plane 701 contains significant bits (MSB) of the coefficients of the transformation coefficient block 103. A first bit plane 704 contains least significant bits (LSB) of the coefficients of the transformation coefficient block 103. The transformation coefficient block 103 may additionally comprise a plane defining signs of the individual coefficients. The coefficients of the transformation coefficient block 103 may be wavelet indices, for example. Within a code block (within the transformation coefficient block 103),. the wavelet indices are reconstructed within a JPEG2000 decoder (for example using the video decoder 100 of Fig. 1a) on a bit plane by bit plane basis. One starts with the most significant bit plane, and ends with the least significant bit plane.

In the example of Fig. 7, the fourth bit plane 701 would be decoded first, and the first bit plane 704 would be decoded last. Code blocks may have different bit depths. The number of bit depths of the code blocks may vary both within a picture and within a group of pictures. For example, a code block of a low frequency band (for example the frequency band 411 a of Fig. 4) contains relatively important information, and said information is indicated with a higher bit depth (i.e. with a higher number of bit planes) than the information of a code block of a higher frequency band (for example of the frequency band 411j of Fig. 4). The decoding is started, within a code block, with the most important bit plane not consisting only of 0 bits. In the example shown in Fig. 7, therefore, the fourth bit plane 701 would be the first to be decoded.

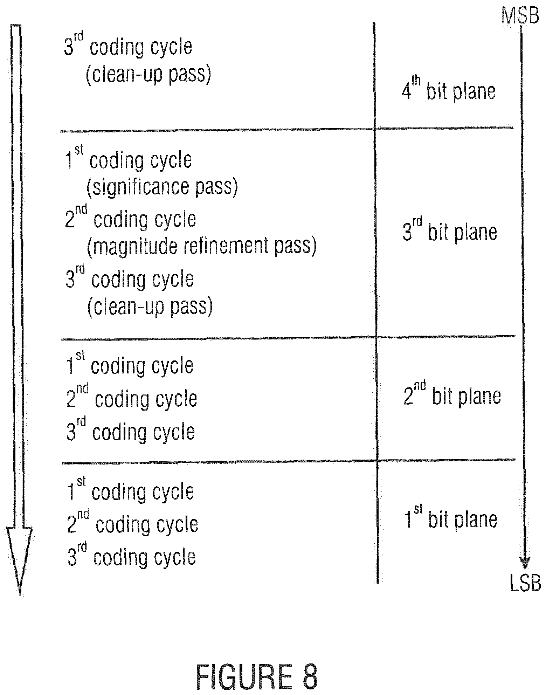

Fig. 8 shows a sequence diagram for decoding a transformation coefficient block by using the example of the transformation coefficient block 103 of Fig. 7. Each bit plane of a code block (except for the most important bit plane of the code block) is cycled through in three different passes (also referred to as coding cycles), each bit of a bit plane being reconstructed in precisely one of the three passes. A first coding cycle is also referred to as a significance pass, or significance-propagation pass, a second coding cycle is also referred to as a magnitude-refinement pass, and a third coding cycle is also referred to as a clean-up pass. As is apparent from Fig. 8, the fourth and most important bit plane 701 of the transformation coefficient block 103 is cycled through only by the third coding cycle, i.e. all of the bits of this fourth bit plane 701 are decoded within this third coding cycle. A third bit plane 702, a second bit plane 703 and the first bit plane 704, however, are cycled through by all three coding cycles, respectively. A detailed description of the individual coding cycles shall be dispensed with at this point; please refer to the specialized literature, such as the document [Michael W. Marcellin, An Overview of JPEG2000, Proc. of IEEE Data Compression Conference, pages 523 - 541, 2000], for example. The meta data of a code block indicate how many passes are contained within a code block, i.e. how many passes are required for fully decoding the code block. In the transformation coefficient block 103 shown in Fig. 7, for example, four bit planes are decoded with a total of ten passes or coding cycles. As was already mentioned above, the number of bit planes of the transformation coefficients may be different, which also goes, therefore, for the number of passes required for decoding a transformation coefficient block.

In other words, the code blocks are decoded by means of three different procedures, so-called pass types or coding cycles. Each of said procedures is performed many times, depending on the picture content. In accordance with further embodiments of the present invention, a further strategy of achieving that threads of an SIMD group frequently perform identical instructions is therefore to have adjacent threads (threads running on computing kernels of the same SIMD group) perform the same procedure (the same coding cycle) over and over again at one point in time (at the same time).

As was described above, the number of passes contained within a code block is indicated, for each code block, in the meta data thereof. A video decoder in accordance with an embodiment of the present invention may therefore initially determine the maximum and minimum pass number of all of the code blocks. A maximum zero-based pass number of the transformation coefficient block 103 shown in Fig. 7 would be 9, for example (the 4x3-$2^{nd}$ pass), and a minimum pass number of the transformation coefficient block 103 would be 0, for example, if no passes were discarded in the compression so as to be able to observe a maximum size of the compressed picture. A further transformation coefficient block, which is arranged, for example, at an overlapping position with the transformation coefficient block 103 in a picture different from that of the transformation coefficient block 103, may comprise bits within a higher bit plane (for example a sixth bit plane - a set bit 1 thus has the absolute value of $2^5$), but it may have been shortened by, e.g., 5 passes to make up for it, in order to be able to observe a maximum data rate. A maximum pass number of this second transformation coefficient block would then be 15, for example (the 6x3-$2^{nd}$ pass), and a minimum pass number of the further transformation coefficient block would then be 5, for example (the $6^{th}$ pass). The transformation coefficient block 103 and the further transformation coefficient block might then be decoded on two computing kernels of a common SIMD group.

It shall be noted that only because a bit plane comprises only zeros, this does not mean that passes of this bit plane or passes of bit planes following in terms of significance are automatically omitted. It is only probable that the lowest passes (for example the lowest 2x3 passes) are cut off, in the case of lossy compression, in the "PCRD optimization (Post Compression Rate Distortion Optimization), since maintaining the passes will not improve the result (at least in the case where only zeros would be reconstructed, which in the event of discarded passes would be inferred anyway).

Within the kernel function (of the EBCOT Tier-1 decoding algorithm 304), iteration is performed over precisely these pass numbers. Individual threads (individual computing kernels), however, will only execute the corresponding pass decoding procedure, in the following, if their code block actually contains the pass number. As an example, a first computing kernel of an SIMD group, which decodes the further transformation coefficient block, would start by decoding the sixth bit plane, and a second computing kernel of the same SIMD group, which decodes the transformation coefficient block 103, would delay its processing for such time until the first computing kernel has arrived at decoding of the fourth bit plane 701 (more specifically, at the clean-up pass or the third coding cycle of the fourth bit plane), and it is only then that it would start decoding the fourth bit plane 701 of the transformation coefficient block 103 with the third coding cycle. The second computing kernel, which decodes the transformation coefficient block 103, then ends its decoding with the clean-up pass (or the third coding cycle) within the lowest bit plane (within the first bit plane 704). The first computing kernel, which decodes the further transformation coefficient block, continues to run only until the first coding cycle (the significant propagation pass) of the second-lowest bit plane (i.e. the second bit plane 703, for example) is completed, since the last five passes were actually cut off. In other words, the two computing kernels run purely in parallel from the third coding cycle of the fourth bit plane 701 up to the first coding cycle of the second bit plane 703.

This example shows that as parallel a processing or decoding as possible may be achieved when transformation coefficient blocks that are decoded on computing kernels of a common SIMD group require a similar or identical number of passes or coding cycles. This may be achieved in that transformation coefficient blocks of identical or overlapping positions of different pictures are decoded on different computing kernels of the same SIMD group. Due to the locally identical position of the transformation coefficient blocks in the pictures, a high level of similarity of the transformation coefficient blocks and, thus, a similar or identical number of coding cycles is acceptable, in particular for successive pictures.

One advantage of embodiments of the present invention therefore consists in that, due to temporally parallel decoding of transformation coefficient blocks of overlapping positions of different pictures on computing kernels of a common SIMD group, similarities of the transformation coefficient blocks are exploited and, thus, processing is enabled that is as parallel as possible. The different pictures may be successive pictures within a sequence of pictures.

As has become apparent from the previous example, video decoders in accordance with an embodiment of the present invention may therefore be configured to decode the same bit plane on the different computing kernels of the SIMD group at the same time, respectively, in the simultaneous decoding of transformation coefficient blocks of different pictures on different computing kernels of an SIMD group.

In accordance with further embodiments, the same coding cycle of the three above-described coding cycles may be utilized, on the computing kernels of an SIMD group, for decoding a bit plane, as was previously described.

If the same GPU (the same stream processor) is to be used for decoding and displaying a picture, the corresponding functions will compete for the GPU. As was already mentioned, the code blocks of several pictures (of a group of pictures or several groups of pictures) may be decoded at the same time in order to increase capacity utilization of the GPU. As an example, if one wants to reproduce a picture sequence with 24 pictures per second, it will be enough for the decoding to require less than 1/24 seconds multiplied by the number of pictures within the group of pictures, i.e. 4/24 seconds, for example. Since this kernel function (the EBCOT Tier-1 entropy decoding 304) involves the highest time overhead, the GPU will be taken up for most of this period. At the same time, however, the GPU would have to be used every 1/24 seconds so as to display a picture previously decoded. Unlike CPUs, however, a function on a GPU may only be started once another function has been fully processed. Thus, reproduction will stall even though a sufficient decoding velocity might be achieved on average.

One solution in accordance with embodiments of the present invention is to subdivide the time-consuming EBCOT Tier-1 kernel function 304 into several small calls not exceeding the duration of a picture interval of, e.g., 1/24 seconds in each case. Thus, there is the chance that the GPU scheduler (the task allocator) alternately allows decoding and display functions to access the GPU, and that the stalling is minimized or eliminated.

This may be achieved, for example, in that a video decoder in accordance with an embodiment of the present invention is configured to interrupt decoding of the transformation coefficient blocks on the different kernels of one or more SIMD groups.

This may be achieved, for example, in that only a limited number of passes (only a limited number of coding cycles) are decoded per call. For example, precisely one bit plane, or even only one pass, i.e. only one coding cycle, can be decoded per call. A video decoder in accordance with an embodiment of the present invention may therefore be configured to interrupt decoding of transformation coefficient blocks between two successive coding cycles so as to make a picture that has already been decoded available for being output.

In case this granularity does not suffice, the individual passes or coding cycles may also be subdivided or interrupted by a video decoder in accordance with an embodiment of the present invention. As was already described above, bit planes of a transformation coefficient block are coded, in the JPEG2000 standard, with a maximum of three successive coding cycles.

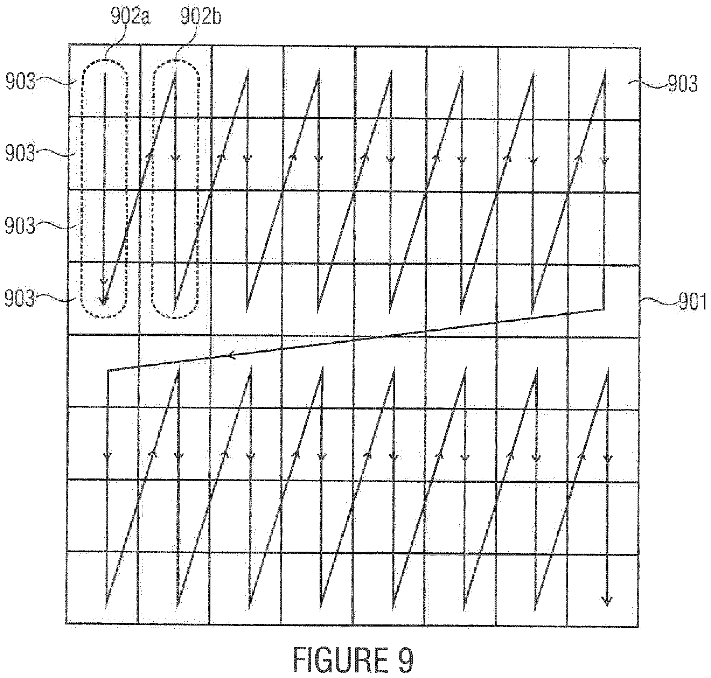

Fig. 9 shows a bit plane 901 of a transformation coefficient block of the size of 8 x 8 pixels. Within the transformation coefficient block 901, the coding order in one of the coding cycles is represented by directions of arrows. It becomes evident that, within a coding cycle, decoding is always effected in strips 902a, 902b of four pixels 903. To increase granularity, a video decoder in accordance with an embodiment of the present invention may therefore subdivide an individual coding cycle or pass into said stripes 902a, 902b of a height of four pixels. Or, in other words, a video decoder in accordance with an embodiment of the present invention may interrupt decoding of a transformation coefficient block or of a bit plane (e.g. of the bit plane 903) of a transformation coefficient block within a coding cycle, for example so as to make a picture that has already been decoded available for being output. Thereafter, processing of the coding cycle may be continued at the place where it was interrupted. Thus, a video decoder in accordance with an embodiment of the present invention may at first process a first strip 902a of the bit plane 901, it may subsequently make available make a picture that has already been decoded available for being output, or it may perform a different function and then continue processing a second strip 902b of the bit plane 901.

In accordance with some further embodiments, this granularity may also be increased or reduced to any further extent, for example to the pixel level, which means that after decoding of a pixel 903, an interruption within a coding cycle may be provided. This granularity in the coding cycles may be achieved, for example, by specifically calling a coding cycle function on computing kernels of SIMD groups, this function containing a variable which indicates how many strips or how many pixels of a bit plane are to be decoded in one go, i.e. without interruption.

The amount of time taken up by an individual pass or strip may be estimated and subsequently be corrected by continuous time measurements while taking into account the stream processor used and the number of code blocks participating in the pass (code blocks that are decoded on computing kernels of one and the same SIMD group at the same time).

Further optimization of the decoding of the transformation coefficient blocks may be achieved when several general strategies are kept to in order to optimize processing of the algorithm on a stream processor. For example, one may exploit the existence of registers that have intermediate results stored therein, and, thus, expensive accesses to slow storage regions may be minimized. In particular the 18 contexts of an MQ decoder, which together result in the probability table in the form of a state machine, may be accommodated within a storage region that may be read and written in a particularly fast manner. Due to their size, the status data of each pixel of a code block, said data being frequently read and written, may be accommodated within an underlying CUDA implementation within the slow global graphics card memory. Likewise, the reconstructed blocks, which are also read and written, as well as the original bit stream, which is only read, may be accommodated within the slow global graphics card memory.

The described example of the implementation of a JPEG2000 decoder while using a video decoder in accordance with an embodiment of the present invention (for example the video decoder 100 of Fig. 1a) enables executing the process of decoding a sequence of pictures on one or more stream processors. Parallel computation of several pictures (e.g. of a group of pictures or several groups of pictures) at the same time enables using to capacity even stream processors that have a very large number of kernels.

As compared to conventional serial processing, this leads to a clear acceleration of the time required for executing the entire decoding operation, and to offloading the CPU. Due to the development of faster stream processors, the execution times of decoders in accordance with embodiments of the present invention will continue to accelerate in the future, without any additional overhead for a developer. Stream processors in the form of graphics cards are readily available at particularly low cost, especially as compared to professional FPGA-based solutions.

Several aspects of video decoders in accordance with embodiments of the present invention shall be set forth once again below.

Some embodiments of the present invention provide a JPEG2000 decoder which uses one or more stream processors for JPEG2000 decompression.

Further embodiments of the present invention provide a JPEG2000 decoder which decodes code blocks of several pictures (of a group of pictures) in parallel so as to increase capacity utilization of the stream processor.

Further embodiments of the present invention provide a JPEG2000 decoder which associates code blocks with the individual threads such that corresponding code blocks of successive pictures are processed within an SIMD vector.

Further embodiments of the present invention provide a JPEG2000 decoder which checks processing of the individual code passes or coding cycles such that threads of an SIMD vector would always process the same type of pass.

Further embodiments of the present invention provide a JPEG2000 decoder which may keep the kernel functions (e.g. the coding cycles) sufficiently granular so that their time of execution does not exceed a picture-rate interval, and that thereby other functions of rendering pictures (such as OpenGL or Direct3D functions, for example) are not impeded.

A method in accordance with an embodiment of the present invention for decoding a sequence of pictures, each of which is coded into a plurality of transformation coefficient blocks, involves decoding transformation coefficient blocks of different pictures on different computing kernels of an SIMD group at the same time.

Embodiments of the present invention may be used for rapidly decompressing JPEG2000 pictures. In the context of digital cinema, reproduction of a sequence of JPEG2000 bit streams (*.j2c), pictures in the JPEG20000 format (*.jp2), or JPEG2000 picture sequences packaged in other container formats is particularly suitable as an application. In particular digital cinema packages (DCP) that are used for sending digital movies to cinemas or other receivers contain JPEG2000 picture sequences packaged in the so-called MXF container format and may be directly reproduced in real time. JPEG2000 compression is also employed in other fields of application, however. For example, the compression method is used, e.g., in digital film archives so as to store video material. One possible application for embodiments of the present invention is an application that reads films from an archive and transcodes them to other target formats.

Even though the main focus so far has been on JPEG2000 decoding and, even though the transformation coefficient blocks thus are typically JPEG2000 transformation coefficient blocks that have originated, for example, from a wavelet analysis within a JPEG2000 encoder, the transformation coefficient blocks may also have originated, in accordance with further embodiments, from spectral decomposition transformation, such as discrete cosine transformation as is used, for example, in the widespread H.264 standard.

Thus, embodiments of the present invention quite generally enable decoding of transformation coefficient blocks of different pictures at the same time (i.e. in parallel), for example on a stream processor which is ideally suited for highly parallel processing of large amounts of data.

In addition to transformation coefficient block decoding (for example to EBCOT Tier-1 decoding), other functions may also be executed in the decoding of a picture or a sequence of pictures on stream processors. For example, wavelet transformation has already been optimized for stream processors. Prior to the existence of GPGPU technologies, Wong et al. outsourced the wavelet stage of the JasPer Codec to the graphics card by means of the Shader language Cg (Wong, T.T., Leung, C.S., Heng, P.A., Wang, J.Q., Discrete Wavelet Transform on Consumer-level Graphics Hardware, IEEE Transactions on Multimedia, volume 9, number 3, pages 668-673, April 2007). Tenllado et al. found out on the basis of Cg implementation that wavelet transformation, which is fast, is to be preferred as an algorithm to the lifting scheme on modem GPU architectures (Tenllado, C., Lario, R., Prieto, M., Tirado, F., The 2D Discrete Wavelet Transform on Programmable Graphics Hardware, Proc. of the 4th IASTED International Conference on Visualization, Imaging, and Image Processing (VIIP '04), pages 808 - 813, Marbella, Spain, June/August 2004). In addition, the wavelet transformation of the Dirac Codec has been CUDA-implemented using GPGPU technology, the lifting scheme being used here (van der Laan, W. J., GPU-Accelerated Dirac Video Codec, [online] available: http://www.cs.rug.nl/~wladimir/sc-cuda/).

With cuj2k, students of the University of Stuttgart have published a CUDA implementation of a JPEG2000 encoder (http://cuj2k.sourceforge.net/). Color transformation, wavelet transformation and EBCOT Tier-1 are outsourced to the graphics card. The parallelism within EBCOT Tier-1 is not increased, in this context, in that several pictures are encoded at the same time, and also the similarity of successive pictures is not exploited, as this is the case in some embodiments of the present invention.

In addition, the documents [Bruns, V., Acceleration of a JPEG2000 coder by outsourcing arithmetically intensive computations to a GPU, Master of Science Thesis, Tampere University of Technology, May 2008] and [Bruns, V., Sparenberg, H., Schmitt, A., Accelerating a JPEG2000 Coder with CUDA, 45th JPEG committee meeting, Poitiers, France, July 2008] show methods of calculating the wavelet synthesis, the dequantization and the color transformation on a stream processor, as were shown in Fig. 4.

In summary, one may state that one aim of embodiments of the present invention is to accelerate JPEG2000 decompression in accordance with ISO/IEC 15444.

Embodiments offer a collection of methods and/or concepts for efficiently executing efficient decoding steps on stream processors. What is decisive for the gain in speed in a JPEG2000 decoder presented here which utilizes a video decoder in accordance with an embodiment of the present invention are the parallel computations of the entropy decoding algorithm EBCOT Tier-1. Here, by processing several pictures at the same time, the level of parallelism may be increased, on the one hand, and the similarity, in terms of content, of code blocks of successive pictures may be exploited, on the other hand.

A prototype based on GPGPU technology is already capable, with the aid of commercially available graphics cards, to decode DCI-conformal 2k picture sequences having more than 24 pictures per second, which enables reproduction of digital cinema packages (DCPs) in real time.

Even though some aspects have been described in connection with a device, it will be understood that said aspects also represent a description of the corresponding method, so that a block or a component of a device is also to be understood as a corresponding method step or as a feature of a method step. By analogy therewith, aspects that have been described in connection with or as a method step also represent a description of a corresponding block or detail or feature of a corresponding device.

Depending on specific implementation requirements, embodiments of the invention may be implemented in hardware or in software. The implementation may be performed using a digital storage medium, for example a floppy disk, a DVD, a Blu-ray disk, a CD, a ROM, a PROM, an EPROM, an EEPROM or a FLASH memory, a hard disk or any other magnetic or optic memory which has electronically readable control signals stored thereon that may cooperate, or that cooperate, with a programmable computer system such that the respective method is performed. This is why the digital storage medium may be computer-readable. Some embodiments in accordance with the invention thus comprise a data carrier which comprises electronically readable control signals capable of cooperating with a programmable computer system such that any of the methods described herein is performed.

Generally, embodiments of the present invention may be implemented as a computer program product having a program code, the program code being operative to perform any of the methods, when the computer program product runs on a computer. The program code may also be stored on a machine-readable carrier, for example.

Other embodiments comprise the computer program for performing any of the methods described herein, said computer program being stored on a machine-readable carrier.

In other words, an embodiment of the inventive method thus is a computer program having a program code for performing any of the methods described herein, when the computer program runs on a computer. A further embodiment of the inventive methods thus is a data carrier (or a digital storage medium or a computer-readable medium) which has recorded thereon the computer program for performing any of the methods described herein.

A further embodiment of the inventive method thus is a data stream or a sequence of signals representing the computer program for performing any of the methods described herein. The data stream or the sequence of signals may be configured, for example, to be transmitted via a data communication link, for example via the internet.

A further embodiment comprises a processing means, such as a computer or a programmable logic device configured or adapted to perform any of the methods described herein.

A further embodiment comprises a computer having installed thereon the computer program for performing any of the methods described herein.

In some embodiments, a programmable logic device (e.g. a field-programmable gate array, an FPGA) may be used for performing some or all of the functionalities of the methods described herein. In some embodiments, a field-programmable gate array may cooperate with a microprocessor for performing any of the methods described herein. Generally, in some embodiments, the methods are performed by any hardware device. Said hardware device may be a universally applicable hardware such as a computer processor (CPU), or hardware specific to the method, such as an ASIC.

The above-described embodiments merely represent an illustration of the principles of the present invention. It will be understood that modifications and variations of the arrangements and details described herein will be obvious to a person skilled in the art. This is why it is intended that the invention be limited only by the scope of the following claims rather than by the specific details presented herein by means of the description and illustration of the embodiments.

Glossary

| | |
|---|---|
| 2K/4K | Information on picture resolution. 2K: up to 2,048 x 1,080, 4K: up to 4,096 x 2,160. |
| CUDA | Compute Unified Device Architecture. GPGPU technology |
| DCI | Digital Cinema Initiative. Association of American film studios aiming at formulating a standard for digital cinema. |
| DCP | Digital Cinema Package. Form of distribution of digital movies. |
| EBCOT | Embedded Block Coding with Optimized Truncation. Context-adaptive, binary, arithmetic entropy coding algorithm, applied in JPEG2000. |
| FWT | Fast Wavelet Transform. Algorithm for fast computation of a wavelet transformation. |
| GPU | Graphics Processing Unit. Processing unit of the graphics card. |
| GPGPU | General Purpose Computation on GPUs. Technology for executing general tasks on the GPU. |
| JPEG2000 | Standard (ISO15444) for picture compression, issued by the Joint Photographic Experts Group. |
| SIMD | Single Instruction Multiple Data paradigm. |
| Tile | Picture tile. In the context of JPEG2000, pictures may be subdivided, prior to compression, into individual tiles, which will then be encoded independently of one another. |
| Wavelet analysis | Transformation of time representation to wavelet representation. |
| Wavelet synthesis | Re-transformation of wavelet representation to time representation. |

**Claims**

1. A video decoder for decoding a sequence of pictures (106a - 106d), each of which is coded into a plurality of transformation coefficient blocks (103a - 103d, 108a - 108d), the video decoder (100) being configured to decode transformation coefficient blocks (103a - 103d) of different pictures (106a - 106d) on different computing kernels (104a - 104d) of a first SIMD group (105, 105a) at the same time,
wherein each of the pictures (106a - 106d) from the sequence of pictures (106a - 106d) may be decoded independently of any other picture (106a - 106d) from the sequence of pictures (106a -106d),
**characterized in that** the transformation coefficient blocks (103a - 103d) of the different pictures (106a - 106d), which are decoded on the different computing kernels (104a - 104d) of the first SIMD group (105, 105a) at the same time, spatially (106a - 106d) overlap one another.

2. The video decoder as claimed in claim 1, configured such that
the different pictures (106a - 106d), whose transformation coefficient blocks (103a - 103d) are decoded on the different computing kernels (104a - 104d) of the first SIMD group (105, 105a) at the same time, are pictures that are directly successive in time.

3. The video decoder as claimed in any of the previous claims, further comprising a wavelet synthesis unit (110) configured to subject the transformation coefficient blocks (103a - 103d) to one wavelet synthesis per picture (106a - 106d).

4. The video decoder as claimed in claim 3, wherein each transformation coefficient block (103a - 103d) of a picture (106a - 106d) is associated with precisely one frequency band (411a - 411j) of the wavelet synthesis, the video decoder (100) being configured such that the transformation coefficient blocks (103a - 103d) of the different pictures (106a - 106d) which are decoded on the different computing kernels (104a - 104d) of the first SIMD group (105, 105a) at the same time are associated with the same frequency band (411a - 411j).

5. The video decoder as claimed in any of claims 1 to 4, wherein a transformation coefficient block (103, 103a - 103d) may be decomposed into a plurality of bit planes (701 - 704), the video decoder (100) further being configured such that in the simultaneous decoding of the transformation coefficient blocks (103a - 103d) of different pictures (106a - 106d) on the different computing kernels (104a - 104d) of the first SIMD group (105), the same bit plane (701 - 704) of the transformation coefficient blocks (103a - 103d) is decoded at the same time, respectively.

6. The video decoder as claimed in claim 5, configured to decode a bit plane (702 - 704) of a transformation coefficient block (103, 103a - 103d), which is not a most significant bit plane (701) of the transformation coefficient block (103, 103a - 103d), while using three successive coding cycles;
the video decoder (100) further being configured such that in the simultaneous decoding of the transformation coefficient blocks (103a - 103d) on the different computing kernels (104a - 104d) of the first SIMD groups (105a), the same coding cycle from the three successive coding cycles is used at the same time in the decoding of the same respective bit plane (702 - 704) of the transformation coefficient blocks (103a - 103d).

7. The video decoder as claimed in claim 6, further configured to interrupt decoding of the transformation coefficient blocks (103a - 103d) between two successive coding cycles.

8. The video decoder as claimed in claims 6 or 7, configured to interrupt decoding of the transformation coefficient blocks (103a - 103d) within a coding cycle.

9. The video decoder as claimed in any of claims 1 to 8, configured to decode, on each computing kernel (104a - 104d) of the different computing kernels (104a - 104d) of the first SIMD group (105, 105a), precisely one transformation coefficient block (103a - 103d) of the different pictures (106a - 106d), respectively, at the same time.

10. The video decoder as claimed in any of claims 1 to 9, wherein the different pictures (106a - 106d), whose transformation coefficient blocks (103a - 103d) are decoded on the different computing kernels (104aa - 104da) of the first SIMD group (105a) at the same time, form a first group (107; 107a) of pictures (106a - 106d), the video decoder (100) being configured to decode, in the simultaneous decoding of first transformation coefficient blocks (103a - 103d) of the pictures (106a - 106d) from the first group (107; 107a) of pictures (106a - 106d) on the different computing kernels (104aa - 104da) of the first SIMD group (105a), second transformation coefficient blocks (108a - 108d) of the pictures (106a - 106d) from the first group (107; 107a) of pictures (106a - 106d) on different computing kernels (104ab - 104db) of a second SIMD group (105b) at the same time.

11. The video decoder as claimed in claim 10, configured to decode, in the decoding of transformation coefficient blocks (103a - 103d, 108a - 108d) of the pictures (106a - 106d) of the first group (107a) of pictures (106a - 106d), transformation coefficient blocks of pictures (106e - 106h) of a second group (107b) of pictures (106e - 106h), which is disjoint from the first group (107a) of pictures (106a - 106d), on different computing kernels of at least one further SIMD group at the same time.

12. The video decoder as claimed in any of claims 1 to 11, wherein the sequence of pictures (106a - 106f) is coded within a JPEG2000 data stream, the video decoder (100) being configured to extract the transformation coefficient blocks (103a - 103d) from the JPEG2000 data stream.

13. A method of decoding a sequence of pictures (106a - 106d), each of which is coded into a plurality of transformation coefficient blocks (103a - 103d, 108a - 108d), wherein transformation coefficient blocks (103a - 103d) of different pictures (106a - 106d) are decoded on different computing kernels (104a - 104d) of a first SIMD group (105, 105a) at the same time,
wherein each of the pictures (106a - 106d) from the sequence of pictures (106a - 106d) may be decoded independently of any other picture (106a - 106d) from the sequence of pictures (106a - 106d),
charcterized in that the transformation coefficient blocks (103a - 103d) of the different pictures (106a - 106d), which are decoded on the different computing kernels (104a - 104d) of the first SIMD group (105, 105a) at the same time, spatially (106a - 106d) overlap one another.

14. A computer program comprising a program code for performing the method as claimed in claim 13, when the program runs on a computer.

**Patentansprüche**

1. Ein Videodecodierer zum Decodieren einer Sequenz von Bildern (106a - 106d), von denen jedes in eine Mehrzahl von Transformationskoeffizientenblöcken (103a - 103d, 108a - 108d) codiert ist, wobei der Videodecodierer (100) ausgebildet ist, Transformationskoeffizientenblöcke (103a - 103d) verschiedener Bilder (106a - 106d) zeitgleich auf verschiedenen Rechenkernen (104a - 104d) einer ersten SIMD-Gruppe (105, 105a) zu decodieren,
wobei jedes der Bilder (106a - 106d) aus der Sequenz von Bildern (106a - 106d) unabhängig von einem anderen Bild (106a - 106d) aus der Sequenz von Bildern (106a - 106d) decodiert werden kann,
**dadurch gekennzeichnet, dass** die Transformationskoeffizientenblöcke (103a - 103d) der verschiedenen Bilder (106a - 106d), welche zeitgleich auf den verschiedenen Rechenkernen (104a - 104d) der ersten SIMD-Gruppe (105, 105a) decodiert werden, einander räumlich (106a - 106d) überlappen.

2. Der Videodecodierer gemäß Anspruch 1, der derart ausgebildet ist, dass die verschiedenen Bilder (106a - 106d), deren Transformationskoeffizientenblöcke (103a - 103d) zeitgleich auf den verschiedenen Rechenkernen (104a - 104d) der ersten SIMD-Gruppe (105, 105a) decodiert werden, zeitlich direkt aufeinanderfolgende Bilder sind.

3. Der Videodecodierer gemäß einem der vorhergehenden Ansprüche, der ferner eine Wavelet-Syntheseeinheit (110) aufweist, die ausgebildet ist, die Transformationskoeffizientenblöcke (103a - 103d) einer Wavelet-Synthese pro Bild (106a - 106d) zu unterziehen.

4. Der Videodecodierer gemäß Anspruch 3, bei dem jeder Transformationskoeffizientenblock (103a - 103d) eines Bildes (106a - 106d) genau einem Frequenzband (411a - 411j) der Wavelet-Synthese zugeordnet ist, wobei der Videodecodierer (100) derart ausgebildet ist, dass die Transformationskoeffizientenblöcke (103a - 103d) der verschiedenen Bilder (106a - 106d), welche zeitgleich auf den verschiedenen Rechenkernen (104a - 104d) der ersten SIMD-Gruppe (105, 105a) decodiert werden, demselben Frequenzband (411a - 411j) zugeordnet sind.

5. Der Videodecodierer gemäß einem der Ansprüche 1 bis 4, bei dem ein Transformationskoeffizientenblock (103, 103a - 103d) in eine Mehrzahl von Bitebenen (701 - 704) zerlegt werden kann, wobei der Videodecodierer (100) ferner derart ausgebildet ist, dass bei der zeitgleichen Decodierung der Transformationskoeffizientenblöcke (103a - 103d) verschiedener Bilder (106a - 106d) auf den verschiedenen Rechenkernen (104a - 104d) der ersten SIMD-Gruppe (105) zeitgleich jeweils die gleiche Bitebene (701 - 704) der Transformationskoeffizientenblöcke (103a - 103d) decodiert wird.

6. Der Videodecodierer gemäß Anspruch 5, der ausgebildet ist, eine Bitebene (702 - 704) eines Transformationskoeffizientenblocks (103, 103a - 103d), welche nicht eine höchstwertige Bitebene (701) des Transformationskoeffizientenblocks (103, 103a - 103d) ist, unter Nutzung von drei aufeinanderfolgenden Codierdurchläufen zu decodieren; wobei der Videodecodierer (100) ferner derart ausgebildet ist, dass bei der zeitgleichen Decodierung der Transformationskoeffizientenblöcke (103a - 103d) auf den verschiedenen Rechenkernen (104a - 104d) der ersten SIMD-Gruppen (105a) zeitgleich der gleiche Codierdurchlauf aus den drei aufeinanderfolgenden Codierdurchläufen bei der Decodierung der gleichen jeweiligen Bitebene (702 - 704) der Transformationskoeffizientenblöcke (103a - 103d) verwendet wird.

7. Der Videodecodierer gemäß Anspruch 6, der ferner ausgebildet ist, die Decodierung der Transformationskoeffizientenblöcke (103a - 103d) zwischen zwei aufeinanderfolgenden Codierdurchläufen zu unterbrechen.

8. Der Videodecodierer gemäß Anspruch 6 oder 7, der ausgebildet ist, die Decodierung der Transformationskoeffizientenblöcke (103a - 103d) innerhalb eines Codierdurchlaufs zu unterbrechen.

9. Der Videodecodierer gemäß einem der Ansprüche 1 bis 8, der ausgebildet ist, auf jedem Rechenkern (104a - 104d) der verschiedenen Rechenkerne (104a - 104d) der ersten SIMD-Gruppe (105, 105a) zeitgleich jeweils genau einen Transformationskoeffizientenblock (103a - 103d) der verschiedenen Bilder (106a - 106d) zu decodieren.

10. Der Videodecodierer gemäß einem der Ansprüche 1 bis 9, bei dem die verschiedenen Bilder (106a - 106d), deren Transformationskoeffizientenblöcke (103a - 103d) zeitgleich auf den verschiedenen Rechenkernen (104aa - 104da) der ersten SIMD-Gruppe (105a) decodiert werden, eine erste Gruppe (107; 107a) von Bildern (106a - 106d) bilden, wobei der Videodecodierer (100) ausgebildet ist, bei der zeitgleichen Decodierung erster Transformationskoeffizientenblöcke (103a - 103d) der Bilder (106a - 106d) aus der ersten Gruppe (107; 107a) von Bildern (106a - 106d) auf den verschiedenen Rechenkernen (104aa - 104da) der ersten SIMD-Gruppe (105a) zeitgleich zweite Transformationskoeffizientenblöcke (108a - 108d) der Bilder (106a - 106d) aus der ersten Gruppe (107; 107a) von Bildern (106a - 106d) auf verschiedenen Rechenkernen (104ab - 104db) einer zweiten SIMD-Gruppe (105b) zu decodieren.

11. Der Videodecodierer gemäß Anspruch 10, der ausgebildet ist, bei der Decodierung von Transformationskoeffizientenblöcken (103a - 103d, 108a - 108d) der Bilder (106a - 106d) der ersten Gruppe (107a) von Bildern (106a - 106d) zeitgleich Transformationskoeffizientenblöcke von Bildern (106e - 106h) einer zweiten Gruppe (107b) von Bildern (106e - 106h), welche disjunkt zu der ersten Gruppe (107a) von Bildern (106a - 106d) ist, auf verschiedenen Rechenkernen zumindest einer weiteren SIMD-Gruppe zu decodieren.

12. Der Videodecodierer gemäß einem der Ansprüche 1 bis 11, bei dem die Sequenz von Bildern (106a - 106f) in einem JPEG2000-Datenstrom codiert ist, wobei der Videodecodierer (100) ausgebildet ist, die Transformationskoeffizientenblöcke (103a - 103d) aus dem JPEG2000-Datenstrom zu extrahieren.

13. Ein Verfahren zum Decodieren einer Sequenz von Bildern (106a - 106d), von denen jedes in eine Mehrzahl von Transformationskoeffizientenblöcken (103a - 103d, 108a - 108d) codiert ist, wobei die Transformationskoeffizientenblöcke (103a - 103d) verschiedener Bilder (106a - 106d) zeitgleich auf verschiedenen Rechenkernen (104a - 104d) einer ersten SIMD-Gruppe (105, 105a) decodiert werden,
wobei jedes der Bilder (106a - 106d) aus der Sequenz von Bildern (106a - 106d) unabhängig von einem anderen Bild (106a - 106d) aus der Sequenz von Bildern (106a - 106d) decodiert werden kann,
**dadurch gekennzeichnet, dass** die Transformationskoeffizientenblöcke (103a - 103d) der verschiedenen Bilder (106a - 106d), welche zeitgleich auf den verschiedenen Rechenkernen (104a - 104d) der ersten SIMD-Gruppe (105, 105a) decodiert werden, einander räumlich (106a - 106d) überlappen.

14. Ein Computerprogramm mit einem Programmcode zur Durchführung des Verfahrens nach Anspruch 13, wenn das Programm auf einem Computer läuft.

**Revendications**

1. Décodeur vidéo pour décoder une séquence d'images (106a à 106d) dont chacune est codée en une pluralité de blocs de coefficients de transformation (103a à 103d, 108a à 108d), le décodeur vidéo (100) étant configuré pour décoder les blocs de coefficients de transformation (103a à 103d) de différentes images (106a à 106d) sur différents noyaux de calcul (104a à 104d) d'un premier groupe de SIMD (105, 105a) en même temps,
dans lequel chacune des images (106a à 106d) de la séquence d'images (106a à 106d) peut être décodée indépendamment de toute autre image (106a à 106d) de la séquence d'images (106a à 106d),
**caractérisé par le fait que** les blocs de coefficients de transformation (103a à 103d) des différentes images (106a à 106d) qui sont décodés sur les différents noyaux de calcul (104a à 104d) du premier groupe de SIMD (105, 105a) en même temps viennent spatialement (106a à 106d) en recouvrement l'un avec l'autre.

2. Décodeur vidéo selon la revendication 1, configuré de sorte que les différentes images (106a à 106d) dont les blocs de coefficients de transformation (103a à 103d) sont décodés sur les différents noyaux de calcul (104a à 104d) du premier groupe de SIMD (105, 105a) en même temps soient des images qui sont directement successives dans le temps.

3. Décodeur vidéo selon l'une quelconque des revendications précédentes, comprenant par ailleurs une unité de synthèse d'ondelettes (110) configurée pour soumettre les blocs de coefficients de transformation (103a à 103d) à une synthèse d'ondelettes par image (106a à 106d).

4. Décodeur vidéo selon la revendication 3, dans lequel chaque bloc de coefficients de transformation (103a à 103d) d'une image (106a à 106d) est associé à précisément une bande de fréquences (411a à 411j) de la synthèse d'ondelettes, le décodeur vidéo (100) étant configuré de sorte que les blocs de coefficients de transformation (103a à 103d) des différentes images (106a à 106d) qui sont décodés sur les différents noyaux de calcul (104a à 104d) du premier groupe de SIMD (105, 105a) en même temps soient associés à la même bande de fréquences (411a à 411j).

5. Décodeur vidéo selon l'une quelconque des revendications 1 à 4, dans lequel un bloc de coefficients de transformation (103, 103a à 103d) peut être décomposé en une pluralité de plans de bits (701 à 704), le décodeur vidéo (100) étant par ailleurs configuré de sorte que, lors du décodage simultané des blocs de coefficients de transformation (103a à 103d) de différentes images (106a à 106d) sur les différents noyaux de calcul (104a à 104d) du premier groupe de SIMD (105), le même plan de bits (701 à 704) respectivement des blocs de coefficients de transformation (103a à 103d) soit décodé en même temps.

6. Décodeur vidéo selon la revendication 5, configuré pour décoder un plan de bits (702 à 704) d'un bloc de coefficients de transformation (103, 103a à 103d) qui n'est pas un plan de bits le plus significatif (701) du bloc de coefficients de transformation (103, 103a à 103d), tout en utilisant trois cycles de codage successifs ; le décodeur vidéo (100) étant par ailleurs configuré de sorte que, lors du décodage simultané des blocs de coefficients de transformation (103a à 103d) sur les différents noyaux de calcul (104a à 104d) des premiers groupes de SIMD (105a), le même cycle de codage des trois cycles de codage successifs soit utilisé en même temps lors du décodage du même plan de bits respectif (702 à 704) des blocs de coefficients de transformation (103a à 103d).

7. Décodeur vidéo selon la revendication 6, configuré par ailleurs pour interrompre le décodage des blocs de coefficients de transformation (103a à 103d) entre deux cycles de codage successifs.

8. Décodeur vidéo selon les revendications 6 ou 7, configuré pour interrompre le décodage des blocs de coefficients de transformation (103a à 103d) dans un cycle de codage.

9. Décodeur vidéo selon l'une quelconque des revendications 1 à 8, configuré pour décoder, sur chaque noyau de calcul (104a à 104d) des différents noyaux de calcul (104a à 104d) du premier groupe de SIMD (105, 105a), précisément un bloc de coefficients de transformation (103a à 103d) respectivement des différentes images (106a à 106d) en même temps.

10. Décodeur vidéo selon l'une quelconque des revendications 1 à 9, dans lequel les différentes images (106a à 106d) dont les blocs de coefficients de transformation (103a à 103d) sont décodés sur les différents noyaux de calcul (104aa à 104da) du premier groupe de SIMD (105a) en même temps forment un premier groupe (107 ; 107a) d'images (106a à 106d), le décodeur vidéo (100) étant configuré pour décoder, lors du décodage simultané de premiers blocs de coefficients de transformation (103a à 103d) des images (106a à 106d) du premier groupe (107 ; 107a) d'images (106a à 106d) sur les différents noyaux de calcul (104aa à 104da) du premier groupe de SIMD (105a), des deuxièmes blocs de coefficients de transformation (108a à 108d) des images (106a à 106d) du premier groupe (107 ; 107a) d'images (106a à 106d) sur différents noyaux de calcul (104ab à 104db) d'un deuxième groupe de SIMD (105b) en même temps.

11. Décodeur vidéo selon la revendication 10, configuré pour décoder, lors du décodage de blocs de coefficients de transformation (103a à 103d, 108a à 108d) des images (106a à 106d) du premier groupe (107a) d'images (106a à 106d), des blocs de coefficients de transformation d'images (106e à 106h) d'un deuxième groupe (107b) d'images (106e à 106h), qui est disjoint du premier groupe (107a) d'images (106a à 106d), sur différents noyaux de calcul d'au moins un autre groupe de SIMD en même temps.

**12.** Décodeur vidéo selon l'une quelconque des revendications 1 à 11, dans lequel la séquence d'images (106a à 106f) est codée dans un flux de données JPEG2000, le décodeur vidéo (100) étant configuré pour extraire les blocs de coefficients de transformation (103a à 103d) du flux de données JPEG2000.

**13.** Procédé de décodage d'une séquence d'images (106a à 106d) dont chacune est codée en une pluralité de blocs de coefficients de transformation (103a à 103d, 108a à 108d), dans lequel les blocs de coefficients de transformation (103a à 103d) de différentes images (106a à 106d) sont décodés sur différents noyaux de calcul (104a à 104d) d'un premier groupe de SIMD (105, 105a) en même temps,
dans lequel chacune des images (106a à 106d) de la séquence d'images (106a à 106d) peut être décodée indépendamment de toute autre image (106a à 106d) de la séquence d'images (106a à 106d),
**caractérisé par le fait que** les blocs de coefficients de transformation (103a à 103d) des différentes images (106a à 106d) qui sont décodés sur les différents noyaux de calcul (104a à 104d) du premier groupe de SIMD (105, 105a) en même temps viennent spatialement (106a à 106d) en recouvrement l'un avec l'autre.

**14.** Programme d'ordinateur comprenant un code de programme pour réaliser le procédé selon la revendication 13 lorsque le programme est exécuté sur un ordinateur.

100

video decoder

101

110

102

**FIGURE 1A**

FIGURE 1B

FIGURE 2A

106a
106b
106c
106d
107a
1st GOP
105a
1st SIMD group
2nd SIMD group
Xth SIMD group
105x

106e
106f
106g
106h
107b
2nd GOP
X+1st SIMD group
X+2nd SIMD group
2Xth SIMD group

FIGURE 2B

FIGURE 3

EP 2 591 599 B1

FIGURE 4

N: = number of code blocks within a bit stream

G: = number of pictures within a group of pictures (GOP)

r: = 0 (number of code blocks to be reconstructed per bit stream) — 500

$Cblk_g$ := vector with code blocks for bit stream g

Cblk := vector with indices of non-discarded code blocks

count i from 0 to N-1, step size 1 — 501

does $Cblk_{0,i}$ lie within subband to be discarded? — 502

yes                                                        no

count g from 0 to G-1, step size 1 — 503

does $Cblk_{g,i}$ describe empty code block? — 504

no                                                        yes

Cblk[r++] := i

break?

start kernel with G × r threads — 505

## FIGURE 5

group of pictures (GOP)

106a 106b 106c 106n

0.0 | 0.1

1.0 | 1.1

2.0 | 2.1

G-1.0 | G-1.1

601 602

pictures

G-1.
R-1

code blocks

0.0 | 1.0 | 2.0 | 3.0 | 0.1 | 1.1 | 2.1 | 3.1 | ••• | G-1.R-1 | G-1.R-1 | G-1.R-1 | G-1.R-1

0 | 1 | 2 | 3 | 4 | 5 | 6 | 7 | ••• | T-4 | T-3 | T-2 | T-1

104dn threads

104aa

105a

SIMD vector

105b

SIMD vector

105n

SIMD vector

FIGURE 6

EP 2 591 599 B1

FIGURE 7

FIGURE 8

FIGURE 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008079041 A1

### Non-patent literature cited in the description

- **COR MEENDERINCK et al.** Parallel Scalability of Video Decoders. *TECHNICAL REPORT,* 30 June 2008
- Parallelizing Motion JPEG 2000 with CUDA. **DATLA S et al.** COMPUTER AND ELECTRICAL ENGINEERING, 2009. ICCEE '09. SECOND INTERNATIONAL CONFERENCE. IEEE, 28 December 2009
- Advances in Hardware Architectures for Image and Video Coding-A Survey. **CHANG Y-C et al.** PROCEEDINGS OF THE IEEE. IEEE, 01 January 2005, vol. 93, 184-197
- **BRUNS, V.** Acceleration of a JPEG2000 coder by outsourcing arithmetically intensive computations to a GPU. *Master of Science Thesis,* May 2008
- **MICHAEL W. MARCELLIN.** An Overview of JPEG2000. *Proc. of IEEE Data Compression Conference,* 2000, 523-541
- **WONG, T.T. ; LEUNG, C.S. ; HENG, P.A. ; WANG, J.Q.** Discrete Wavelet Transform on Consumer-level Graphics Hardware. *IEEE Transactions on Multimedia,* April 2007, vol. 9 (3), 668-673
- **TENLLADO, C. ; LARIO, R. ; PRIETO, M. ; TIRADO, F.** The 2D Discrete Wavelet Transform on Programmable Graphics Hardware. *Proc. of the 4th IASTED International Conference on Visualization, Imaging, and Image Processing (VIIP '04),* June 2004, 808-813
- **VAN DER LAAN, W. J.** *GPU-Accelerated Dirac Video Codec, http://www.cs.rug.nl/~wladimir/sc-cuda*
- **BRUNS, V.** Acceleration of a JPEG2000 coder by outsourcing arithmetically intensive computations to a GPU. *Master of Science Thesis, Tampere University of Technology,* May 2008
- **BRUNS, V. ; SPARENBERG, H. ; SCHMITT, A.** Accelerating a JPEG2000 Coder with CUDA. *45th JPEG committee meeting, Poitiers, France,* July 2008